(19) Europäisches Patentamt
European Patent Office
Office européen des brevets

(11) **EP 4 451 109 B1**

(12) **EUROPEAN PATENT SPECIFICATION**

(45) Date of publication and mention
of the grant of the patent:
**04.03.2026 Bulletin 2026/10**

(21) Application number: **22923685.6**

(22) Date of filing: **30.12.2022**

(51) International Patent Classification (IPC):
*G06F 3/16* (2006.01)     *H04M 1/72454* (2021.01)
*H04M 1/60* (2006.01)     *G10H 1/46* (2006.01)

(52) Cooperative Patent Classification (CPC):
**G06F 3/16; G06F 3/165; H04M 1/6016;**
**H04M 1/72454;** G10H 1/46

(86) International application number:
**PCT/CN2022/144271**

(87) International publication number:
**WO 2023/142900 (03.08.2023 Gazette 2023/31)**

(54) **VOLUME ADJUSTMENT METHOD AND ELECTRONIC DEVICE**

VOLUMENANPASSUNGSVERFAHREN UND ELEKTRONISCHE VORRICHTUNG

PROCÉDÉ DE RÉGLAGE DU VOLUME ET DISPOSITIF ÉLECTRONIQUE

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(30) Priority: **25.01.2022 CN 202210087253**

(43) Date of publication of application:
**23.10.2024 Bulletin 2024/43**

(73) Proprietor: **Huawei Technologies Co., Ltd.**
**Shenzhen, Guangdong 518129 (CN)**

(72) Inventors:
• **ZHANG, Shi**
**Shenzhen, Guangdong 518129 (CN)**

• YIN, Mingjie
**Shenzhen, Guangdong 518129 (CN)**
• MIAO, Haibo
**Shenzhen, Guangdong 518129 (CN)**

(74) Representative: **Isarpatent**
**Patent- und Rechtsanwälte**
**Barth Hassa Peckmann & Partner mbB**
**Friedrichstraße 31**
**80801 München (DE)**

(56) References cited:
**EP-A1- 3 477 857     WO-A1-2019/033436**
**CN-A- 108 052 304     CN-A- 108 279 861**
**CN-A- 112 445 449     CN-A- 112 698 806**
**CN-A- 113 489 844     CN-A- 113 489 844**
**US-A1- 2015 249 890     US-B1- 9 971 561**

**Description**

**TECHNICAL FIELD**

This application relates to the field of terminal technologies, and in particular, the invention relates to a volume adjustment method and an electronic device.

**BACKGROUND**

A sound play function is a basic function of most electronic devices such as a mobile phone, a television, a sound box, a tablet, and the like. In addition, to be user-friendly, the electronic device further has a volume adjustment function. For example, the electronic device is provided with a volume up button and a volume down button to adjust volume. Take the mobile phone as an example, which is generally provided with volume levels to adjust volume level by level.
Currently, the volume levels are set on the electronic device before delivery and remain unchanged. For example, a lowest level corresponds to 5 decibels (dB) and a highest level corresponds to 30 dB. However, such settings of the volume levels cannot adapt to all users. For example, some users who are sensitive to sound may still feel it too loud even when the volume is adjusted to the lowest level; while some users who are insensitive to sound may still feel it too low even when the volume is adjusted to the highest level.
Consequently, the current volume level settings of the electronic device cannot satisfy requirements of different users.
CN 112 445 449 A relates to a volume configuration method, device, electronic equipment, and medium. The core of the disclosed method involves automatically configuring the volume levels of an electronic device based on a pre-established sound pressure level sample set. CN 113 489 844 A relates to a method for adjusting volume levels in an electronic device, particularly focusing on achieving consistency between the volume levels of a Bluetooth device (such as a Bluetooth headset) and the connected electronic device (such as a smartphone). US 2015/0249890 A1 and EP 3 477 857 A1 relate to audio apparatus and methods thereof.

**SUMMARY**

An objective of the present invention is to provide a volume adjustment method and an electronic device, so that volume of sound output by the electronic device can meet requirements of different users. This object is solved by the attached independent claims and further embodiments and improvements of the invention are listed in the attached dependent claims. Hereinafter, up to the "brief description of the drawings", expressions like "...aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "...aspect according to an example", "the disclosure describes", or "the disclosure" describe technical teaching which relates to the understanding of the invention or its embodiments, which, however, is not claimed as such.
According to a first aspect according to the invention, a volume adjustment method is provided, and is applied to an electronic device. The electronic device may be a mobile phone, a tablet computer, or the like. The electronic device includes N volume levels, N is a positive integer, the N volume levels include a first level and a second level, the first level corresponds to first volume, the second level corresponds to second volume, and a difference between the first volume and the second volume is a first difference. The electronic device adjusts the N volume levels to M volume levels when a first condition is satisfied, where M is a positive integer, the M volume levels include a third level and a fourth level, the third level and the first level are a same level (for example, both the third level and the first level are a level 1), the fourth level and the second level are a same level (for example, both the fourth level and the second level are a level 2), the third level corresponds to third volume, the fourth level corresponds to fourth volume, and a difference between the third volume and the fourth volume is a second difference. The M volume levels satisfy the following:

the third volume is not equal to the first volume;
Generally, an electronic device adjusts volume based on a volume curve. A horizontal coordinate of the volume curve may indicate a volume level, a vertical coordinate may indicate a volume range (including volume corresponding to each level), and a slope indicates a volume difference between two levels. Currently, a volume curve of an electronic device is fixed, and cannot satisfy requirements of different users. In the volume adjustment method provided in this application, a volume curve of an electronic device may be adjusted, that is, at least one of a volume level, a volume range, and a slope may be adjusted.

For example, an electronic device has N volume levels before delivery, and the electronic device may adjust the N volume levels to M volume levels, where M and N may be the same or different, and both M and N are positive integers. For example, the electronic device has five levels in total before delivery, and after adjustment, the electronic device has four levels or six levels.

For another example, the electronic device may further increase or decrease a volume span between two adjacent levels. For example, a volume difference between two adjacent levels (for example, a level 1 and a level 2) of the electronic device is 5 dB before delivery, and after adjustment, a volume difference between the two adjacent levels (for example, the level 1 and the level 2) is 3 dB. In this way, for a user, intermediate volume of the level 1 and the level 2 can be selected, and comfort degree is improved. For another example, a volume difference between two adjacent levels (for example, a level 1 and a level 2) of the electronic device is 5 dB before delivery, and after adjustment, a volume difference between the two adjacent levels (for example, the level 1 and the level 2) is 10 dB. In this way, volume can be greatly adjusted by adjusting the volume once, and the operation is convenient.

In a possible design, the first level and the second level are adjacent levels, the third level and the fourth level are adjacent levels, and the second difference is less than the first difference.

For example, the first level is lower than the second level. A possible scenario is as follows: When the first level is used, the user feels that the volume is excessively low, and when the volume level is adjusted to the second level, the user feels that the volume is excessively high. In other words, the user is not satisfied with the volume corresponding to the first level and the second level, and the user cannot find a comfortable sound level. According to the volume adjustment method provided in this application, a volume difference between adjacent levels can be reduced. In this way, the user can adjust volume to intermediate volume of the first level and the second level, and comfort degree is improved.

In a possible design, that a first condition is satisfied includes: it is detected that a quantity of times of switching between the first level and the second level within first preset duration is greater than a first preset quantity of times.

For example, the first level is lower than the second level. A possible scenario is as follows: When the first level is used, the user feels that the volume is excessively low, and when the volume level is adjusted to the second level, the user feels that the volume is excessively high. Then, the user repeatedly switches between the first level and the second level to seek comfortable volume. Therefore, in this application, when the quantity of times of switching between the first level and the second level is greater than the first preset quantity of times, the electronic device decreases the volume difference between the first level and the second level. In this way, the user can adjust volume to intermediate volume of the first level and the second level, and comfort degree is improved.

According to the invention, the first level and the third level are a highest level, the second level and the fourth level are a lowest level, and the second difference is greater than the first difference. In other words, a volume difference between the highest level and the lowest level is increased, that is, a volume range is increased. In this way, the user can select desired volume in a larger volume range.

In a possible design, the third volume is higher than the first volume, and/or the fourth volume is lower than the second volume. For example, the volume (that is, the first volume) corresponding to the highest level is 25 dB originally, and after adjustment, the volume (that is, the third volume) corresponding to the highest level is 30 dB. The volume (that is, the second volume) corresponding to the lowest level is 5 dB originally, and after adjustment, the volume (that is, the fourth volume) corresponding to the lowest level is 3 dB. In this way, the user can select desired volume in a larger volume range.

In a possible design, that a first condition is satisfied includes: when the first level is reached currently, an operation indicating to continue to increase volume is received; and/or when the second level is reached currently, an operation indicating to continue to decrease volume is received. In other words, when the first level is the highest level, and the highest level of the electronic device is reached currently, if an operation indicating to continue to increase volume is received, the volume corresponding to the highest level is increased. Additionally/Alternatively, when the second level is the lowest level, and the lowest level of the electronic device is reached currently, if an operation indicating to continue to decrease volume is received, the volume corresponding to the lowest level is decreased. In this way, the user can select desired volume in a larger volume range.

In a possible design, the operation of continuing to increase the volume includes: an operation of pressing and holding a volume up button, or an operation of pressing a volume up button more than a second preset quantity of times within second preset duration. In other words, when the first level is the highest level, and the highest level of the electronic device is reached currently, if an operation of pressing and holding a volume up button is received or an operation of pressing a volume up button a plurality of times within short duration is received, the volume corresponding to the highest level is increased. In this way, the user may select higher volume, and this is not limited by a volume upper limit of a volume curve set on the electronic device before delivery.

In a possible design, the operation of continuing to decrease the volume includes: an operation of pressing and holding a volume down button, or an operation of pressing a volume down button more than a third preset quantity of times within third preset duration. In other words, when the second level is the lowest level, and the lowest level of the electronic device is reached currently, if an operation of pressing and holding a volume down button is received or an operation of pressing a volume down button a plurality of times within short duration is received, the volume corresponding to the lowest level is decreased. In this way, the user may select lower volume, and this is not limited by a volume lower limit of the volume curve set on the electronic device before delivery.

In a possible design, that a first condition is satisfied includes at least one of the following:

it is detected that a volume level in the N volume levels has a use frequency less than a use frequency threshold;
it is detected that a current user of the electronic device is changed;
it is detected that a current environment in which the electronic device is located is changed;
it is detected that the electronic device is connected to an external sound output device; or
it is detected that a user performs a volume adjustment operation in a first interface.

In conclusion, the volume curve of the electronic device is not fixed, and may be changed with a use habit of a user, a current user, a current environment, or a connected external sound output device. Alternatively, a user may perform a volume adjustment operation in a first interface to manually adjust the volume curve.

In a possible design, when the first condition includes that a volume level in the N volume levels has a use frequency less than a use frequency threshold, that the electronic device adjusts the N volume levels to M volume levels includes: removing the volume level with the use frequency less than the use frequency threshold. In other words, the volume curve may be adjusted based on a use habit of a user. For example, if a probability of using a level 1 by the user is relatively low, the level 1 may be removed, and an original level 2 is used as a new level 1.

In a possible design, when the first condition includes that a current user of the electronic device is changed, that the electronic device adjusts the N volume levels to M volume levels includes: adjusting the N volume levels to M volume levels corresponding to the current user. In other words, the volume curve of the electronic device may be changed with a current user, to meet requirements of different users.

In a possible design, when the first condition includes that a current environment in which the electronic device is located is changed, that the electronic device adjusts the N volume levels to M volume levels includes: adjusting the N volume levels to M volume levels corresponding to the current environment. In other words, the volume curve of the electronic device may be changed with a current environment. For example, in a noisy environment, volume corresponding to a level on a volume curve is relatively high, and in a quiet environment, volume corresponding to a level on a volume curve is relatively low.

In a possible design, when the first condition includes that the electronic device is connected to an external sound output device, that the electronic device adjusts the N volume levels to M volume levels includes: adjusting the N volume levels to M volume levels corresponding to the external sound output device. In other words, the volume curve of the electronic device may be changed with an external sound output device; or when the electronic device is not connected to an external sound output device, a volume curve is used, and when the electronic device is connected to an external sound output device, another volume curve is used.

In a possible design, a current volume level of the electronic device is adjusted according to a change of at least one of the following: environment, time, user of the electronic device, foreground application, or connected sound output device. In other words, there is no need for a user to manually adjust a current volume level, and the current volume level may be adaptively adjusted for a current environment, current time, current user, current foreground application, and currently connected device.

In a possible design, the method further includes: The electronic device adjusts the current volume level to a fifth level when the electronic device detects that a first environment is entered, where the fifth level is a volume level that is determined based on a first historical record and that has a highest probability of using by a user in the first environment, and the first historical record includes historical probabilities of using each level by the user in different environments. In other words, when the electronic device enters a specific environment, the electronic device may adjust the current volume level to a volume level that has been used a relatively large quantity of times in the environment. There is no need for manual adjustment by a user, and the operation is convenient.

In a possible design, the method further includes: The electronic device adjusts the current volume level to a sixth level when the electronic device determines that a current time is in a first time period, where the sixth level is a volume level that is determined based on a second historical record and that has a highest probability of using by a user in the first time period, and the second historical record includes historical probabilities of using each level by the user in different time periods. In other words, when the electronic device is in a specific time period, the electronic device may adjust the current volume level to a volume level that has been used a relatively large quantity of times in the time period. There is no need for manual adjustment by a user, and the operation is convenient.

In a possible design, before that the electronic device adjusts the N volume levels to M volume levels, the method further includes: displaying a first progress bar in response to a first operation, to describe current volume by using progress indicated by the first progress bar. After that the electronic device adjusts the N volume levels to M volume levels, the method further includes: displaying a second progress bar in response to a second operation, to describe current volume by using progress indicated by the second progress bar. The first progress bar is different from the second progress bar.

In other words, when the electronic device adjusts the N volume levels to the M volume levels, a progress bar displayed by the electronic device is changed, to conveniently prompt a user that volume levels are adjusted.

In a possible design, that the first progress bar is different from the second progress bar includes at least one of the following:

a total length of the first progress bar is different from a total length of the second progress bar;
a movement step of the first progress bar is different from a movement step of the second progress bar, and the movement step indicates a movement length required when one level is adjusted; or
a quantity of movement times of the first progress bar is different from a quantity of movement times of the second progress bar, and the quantity of movement times indicates a quantity of movement times required when the lowest level is adjusted to the highest level.

In conclusion, after adjusting the volume curve, the electronic device may prompt, by using a progress bar, a user that the volume curve is adjusted.

For example, if there are five levels before adjustment and six levels after adjustment, a progress bar before adjustment is shorter, and a progress bar after adjustment is longer.

For another example, the progress bar before adjustment needs to move a first step when one level is adjusted (for example, from a level 1 to a level 2), the progress bar after adjustment needs to move a second step when the same level is adjusted (for example, from the level 1 to the level 2), and the first step is different from the second step.

For another example, the progress bar before adjustment needs to move five times from the lowest level to the highest level, the progress bar after adjustment needs to move six times from the lowest level to the highest level, and therefore quantities of movement times are different.

In a possible design, the total length and the quantity of movement times of the first progress bar are related to N, and the movement step of the first progress bar is related to a volume difference between two adjacent levels in the N volume levels. The total length and the quantity of movement times of the second progress bar are related to M, and the movement step of the second progress bar is related to a volume difference between two adjacent levels in the M volume levels.

It should be understood that a larger value of N indicates a larger total length of the first progress bar and a larger quantity of movement times. Similarly, a larger value of M indicates a larger total length of the second progress bar and a larger quantity of movement times. In addition, a larger volume difference between two adjacent levels indicates a larger movement step between the two adjacent levels. In this manner, interaction experience is relatively good in a process in which a user adjusts volume.

In a possible design, the method further includes: displaying a first prompt bar, where progress indicated by the first prompt bar is used to describe current volume; and displaying a second prompt bar in response to a third operation, where when progress on the second prompt bar is changed by a first length, the progress on the first prompt bar is changed by a second length, a volume change amount corresponding to the first length is the same as a volume change amount corresponding to the second length, and the first length is greater than the second length.

It should be noted that, there is a case in which a display area of the first progress bar is small, and a user cannot implement volume fine-tuning on the first progress bar. Therefore, the electronic device may invoke the second prompt bar in response to the third operation, so that volume fine-tuning can be implemented on the second prompt bar.

In a possible design, that the third volume is higher than the first volume includes that the third volume satisfies the following formula:

$$Y1 = f(x_{\max}) + \frac{f(x_{max}) - f(x_1)}{x_{max} - x_1}$$

Y1 indicates the third volume, x indicates a volume level, $x_{\max}$ indicates the first level, $f(x_{max})$ indicates the first volume, $x_1$ indicates the second level, and $f(x_1)$ indicates the second volume.

In other words, when determining that the highest level is reached currently, and determining that a user continues to increase volume, the electronic device may increase the volume to Y1, that is, the third volume. Y1 is obtained according to the foregoing formula, that is, $\frac{f(x_{max}) - f(x_1)}{x_{max} - x_1}$ is added to $f(x_{max})$. In this manner, volume is increased gradually, and the $x_{max} - x_1$ increase is not excessive. This avoids bringing a user a sense of suddenness due to an instant and great increase in volume, and avoids sensations of pressure and discomfort caused to an ear.

In a possible design, that the fourth volume is lower than the second volume includes that the fourth volume satisfies the following formula:

$$Y2 = f(x_1) - \frac{f(x_{max}) - f(x_1)}{x_{max} - x_1}$$

Y1 indicates the fourth volume, x indicates a volume level, $x_{max}$ indicates the first level, $f(x_{max})$ indicates the first volume, $x_1$ indicates the second level, and $f(x_1)$ indicates the second volume.

In other words, when determining that the lowest level is reached currently, and determining that a user continues to decrease volume, the electronic device may decrease the volume to Y2, that is, the fourth volume. Y2 is obtained according to the foregoing formula, that is, $\frac{f(x_{max}) - f(x_1)}{x_{max} - x_1}$ is subtracted from $f(x_1)$. In this manner, volume is decreased gradually, and $x_{max}$-$x_1$ the decrease is not excessive. This avoids bringing a user a sense of suddenness due to an instant and great decrease in volume.

In a possible design, the method further includes: using the M volume levels on the electronic device during loudspeaker sound play, earpiece sound play, or sound output by an external sound output device. In other words, after the electronic device adjusts the volume curve, an adjusted volume curve is applicable to a loudspeaker sound play scenario, an earpiece sound play scenario, or a sound output scenario of an external sound output device.

In a possible design, the loudspeaker sound play includes at least one of the following: incoming call ringtone, hands-free call, new notification, alarm clock, and sound output by a multimedia application; and the earpiece sound play includes: voice call and/or voice message play.

According to a second aspect according to the invention, an electronic device is provided, including:
a processor, a memory, and one or more programs.

The one or more programs are stored in the memory, the one or more programs include instructions, and when the instructions are executed by the processor, the electronic device is enabled to perform the method according to the first aspect.

According to a third aspect not claimed, a computer-readable storage medium is provided. The computer-readable storage medium is configured to store a computer program. When the computer program is run on a computer, the computer is enabled to perform the method according to the first aspect.

According to a fourth aspect not claimed, a computer program product is provided, including a computer program. When the computer program is run on a computer, the computer is enabled to perform the method according to the first aspect.

According to a fifth aspect not claimed, a graphical user interface on an electronic device is further provided. The electronic device has a display, a memory, and a processor. The processor is configured to execute one or more computer programs stored in the memory. The graphical user interface includes a graphical user interface displayed when the electronic device performs the method according to the first aspect.

According to a sixth aspect not claimed, an embodiment of this application further provides a chip. The chip is coupled to a memory in an electronic device, and is configured to invoke a computer program stored in the memory and perform the technical solution according to the first aspect in embodiments of this application. In this embodiment of this application, "coupling" means that two components are directly or indirectly combined with each other.

For beneficial effects of the second aspect to the sixth aspect, refer to the beneficial effects of the first aspect. Details are not described again.

**BRIEF DESCRIPTION OF DRAWINGS**

FIG. 1 is a schematic diagram of a hardware structure of an electronic device according to an embodiment of this application;
FIG. 2 is a schematic diagram of a software structure of an electronic device according to an embodiment of this application;
FIG. 3 is a schematic diagram of a volume adjustment button on an electronic device according to an embodiment of this application;
FIG. 4(a) to FIG. 4(c) are schematic diagrams of a volume prompt box on an electronic device according to an embodiment of this application;
FIG. 5 is a schematic diagram of a volume curve according to an embodiment of this application;
FIG. 6(a) to FIG. 6(c) are schematic diagrams of interfaces of a Settings application of an electronic device according to an embodiment of this application;
FIG. 7A(a), FIG. 7A(b), and FIG. 7B are schematic diagrams of a volume adjustment manner according to an embodiment of this application;

FIG. 8A and FIG. 8B are schematic diagrams of another volume adjustment manner according to an embodiment of this application;

FIG. 9A and FIG. 9B are schematic diagrams of still another volume adjustment manner according to an embodiment of this application;

FIG. 10 is a schematic diagram of still another volume adjustment manner according to an embodiment of this application;

FIG. 11 is still another schematic diagram of a volume prompt box according to an embodiment of this application;

FIG. 12, FIG. 13(a), and FIG. 13(b) are still other schematic diagrams of a volume prompt box according to an embodiment of this application;

FIG. 14(a) and FIG. 14(b) are schematic diagrams of still another volume adjustment manner according to an embodiment of this application;

FIG. 15A(a), FIG. 15A(b), and FIG. 15B are schematic diagrams of a prompt bar after volume adjustment according to an embodiment of this application;

FIG. 16(a) and FIG. 16(b) are other schematic diagrams of a prompt bar after volume adjustment according to an embodiment of this application;

FIG. 17 is a schematic diagram of another volume adjustment method according to an embodiment of this application;

FIG. 18A(a), FIG. 18A(b), and FIG. 18B are schematic diagrams of fine volume adjustment according to an embodiment of this application;

FIG. 19 is another schematic diagram of fine volume adjustment according to an embodiment of this application;

FIG. 20 is still another schematic flowchart of a volume adjustment method according to an embodiment of this application;

FIG. 21(a) to FIG. 21(c) are schematic diagrams of a volume adjustment method in different scenarios according to an embodiment of this application; and

FIG. 22 is a schematic diagram of a structure of an electronic device according to an embodiment of this application.

## DESCRIPTION OF EMBODIMENTS

Some terms in embodiments of this application are explained below to facilitate understanding of a person skilled in the art.

In embodiments of this application, "at least one" means one or more, and "a plurality of" means two or more. In addition, it should be understood that in descriptions of this specification, terms such as "first" and "second" are merely used for a distinguishing and description purpose, but shall not be understood as indicating or implying relative importance, or shall not be understood as indicating or implying a sequence. For example, a first operation and a second operation do not indicate importance of the first operation and the second operation or a sequence of the first operation and the second operation, and are merely used for distinguishing and description. In embodiments of this application, "and/or" describes only an association relationship and indicates that three relationships may exist. For example, A and/or B may indicate the following three cases: Only A exists, both A and B exist, and only B exists. In addition, the character "/" in this specification generally indicates an "or" relationship between associated objects.

In descriptions of embodiments of this application, it should be noted that, unless otherwise clearly specified and limited, the terms "installation" and "connection" should be understood in a broad sense. For example, a "connection" may be a detachable connection or an undetachable connection, or may be a direct connection or an indirect connection through an intermediate medium. Orientation terms mentioned in embodiments of this application, for example, "above", "below", "left", "right", "inside", and "outside", are merely directions based on accompanying drawings. Therefore, the orientation terms are used to better and more clearly describe and understand embodiments of this application, but do not indicate or imply that a specified apparatus or element should have a specific orientation and be constructed and operated in the specific orientation. Therefore, such terms cannot be understood as a limitation on embodiments of this application.

Reference to "an embodiment", "some embodiments", or the like described in this specification indicates that one or more embodiments of this specification include a specific feature, structure, or characteristic described with reference to the embodiments. Therefore, expressions such as "in an embodiment", "in some embodiments", "in some other embodiments", and "in other embodiments" that appear at different places in this specification do not necessarily mean reference to a same embodiment. Instead, the expressions mean "one or more but not all of embodiments", unless otherwise specifically emphasized in another manner. The terms "include", "comprise", "have", and their variants all mean "include but are not limited to", unless otherwise specifically emphasized in another manner. In the following description, although numerous features may be designated as optional, it is nevertheless acknowledged that all features defined by the independent claims are not to be read as optional.

A volume adjustment method provided in embodiments of this application is applicable to an electronic device. The electronic device has a volume adjustment function. In some embodiments, the electronic device may be a portable electronic device like a mobile phone, a tablet computer, or a notebook computer; or may be a wearable device like a watch or a band; or may be a smart home device like a television or a refrigerator; or may be a vehicle-mounted device or the like; or may be a virtual reality (VR) device, an augmented reality (AR) device, a mixed reality (MR) device, or the like. In conclusion, a specific type of the electronic device is not limited in embodiments of this application.

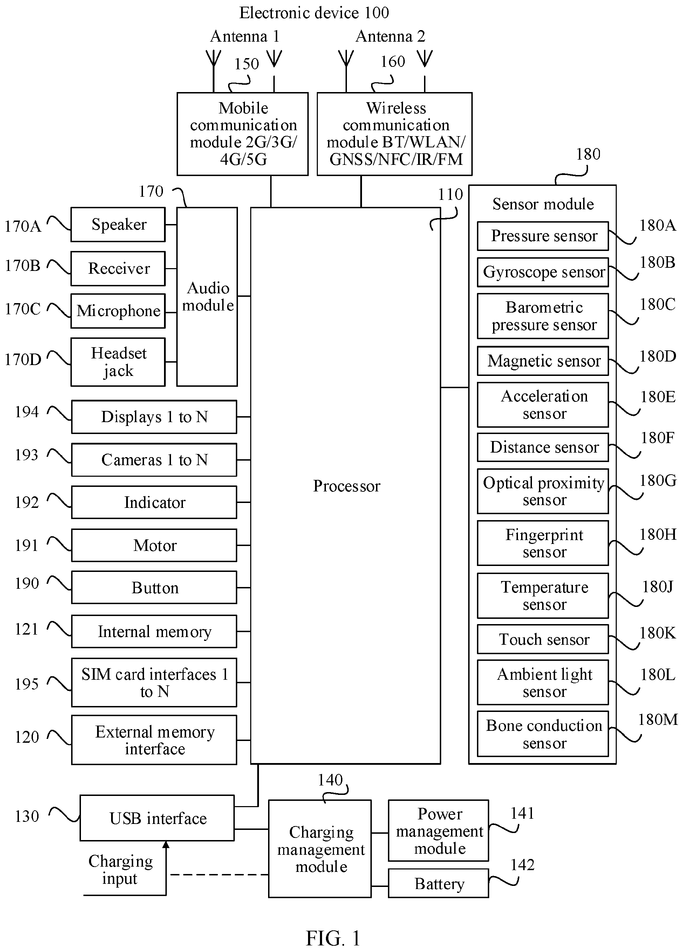

FIG. 1 is a schematic diagram of a structure of an electronic device. As shown in FIG. 1, the electronic device may include a processor 110, an external memory interface 120, an internal memory 121, a universal serial bus (USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The processor 110 may include one or more processing units. For example, the processor 110 may include an application processor (AP), a modem processor, a graphics processing unit (GPU), an image signal processor (ISP), a controller, a memory, a video codec, a digital signal processor (DSP), a baseband processor, a neural-network processing unit (NPU), and/or the like. Different processing units may be independent components, or may be integrated into one or more processors. The controller may be a nerve center and a command center of the electronic device. The controller may generate an operation control signal based on instruction operation code and a time sequence signal, to control instruction reading and instruction execution. A memory may be further disposed in the processor 110, and is configured to store instructions and data. In some embodiments, the memory in the processor 110 is a cache. The memory may store instructions or data that has been recently used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an integrated circuit (I2C) interface, an inter-integrated circuit sound (I2S) interface, a pulse code modulation (PCM) interface, a universal asynchronous receiver/transmitter (UART) interface, a mobile industry processor interface (MIPI), a general-purpose input/output (GPIO) interface, a subscriber identity module (SIM) interface, a universal serial bus (USB) interface, and/or the like.

The I2C interface is a two-way synchronization serial bus, and includes a serial data line (SDL) and a serial clock line (SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be configured to: perform audio communication, and sample, quantize, and encode an analog signal. In some embodiments, the audio module 170 may be coupled to the wireless communication module 160 through a PCM bus interface. In some embodiments, the audio module 170 may alternatively transmit an audio signal to the wireless communication module 160 through the PCM interface, to implement a function of answering a call through a Bluetooth headset. Both the I2S interface and the PCM interface may be configured to perform audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component like the display 194 or the camera 193. The MIPI interface includes a camera serial interface (CSI), a display serial interface (DSI), and the like. In some embodiments, the processor 110 communicates with the camera 193 through the CSI, to implement a photographing function of the electronic device 100. The processor 110 communicates with the display 194 through the DSI, to implement a display function of the electronic device 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, and the like. The GPIO interface may alternatively be configured as an I2C interface, an I2S interface, a UART interface, an MIPI interface, or the like.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to perform data transmission between the electronic device 100 and a peripheral device, or may be configured to connect to a headset for playing audio through the headset. Alternatively, the interface may be configured to connect to another electronic device, for example, an AR device.

It may be understood that an interface connection relationship between the modules that is shown in this embodiment of the present invention is merely an example for description, and does not constitute a limitation on a structure of the electronic device 100. In some other embodiments of this application, the electronic device 100 may alternatively use an interface connection manner different from that in the foregoing embodiment, or use a combination of a plurality of interface connection manners.

A wireless communication function of the electronic device may be implemented through the antenna 1, the antenna 2, the mobile communication module 150, the wireless communication module 160, the modem processor, the baseband processor, and the like. The antenna 1 and the antenna 2 are configured to transmit and receive electromagnetic wave signals. Each antenna in the electronic device may be configured to cover one or more communication bands. Different antennas may be multiplexed, to improve antenna utilization. For example, the antenna 1 may be multiplexed as a diversity antenna in a wireless local area network. In some other embodiments, the antennas may be used in combination with a tuning switch.

The mobile communication module 150 may provide a wireless communication solution that is applied to the electronic device and that includes 2G/3G/4G/5G and the like. The mobile communication module 150 may include at least one filter, a switch, a power amplifier, a low noise amplifier (LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same device as at least some modules of the processor 110.

The wireless communication module 160 may provide a wireless communication solution that is applied to the electronic device and that includes a wireless local area network (WLAN) (for example, a wireless fidelity (Wi-Fi) network), Bluetooth (BT), a global navigation satellite system (GNSS), frequency modulation (FM), near field communication (NFC), an infrared (IR) technology, and the like. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the electronic device, the antenna 1 and the mobile communication module 150 are coupled, and the antenna 2 and the wireless communication module 160 are coupled, so that the electronic device can communicate with a network and another device by using a wireless communication technology. The wireless communication technology may include a global system for mobile communications (GSM), a general packet radio service (GPRS), code division multiple access (CDMA), wideband code division multiple access (WCDMA), time-division code division multiple access (TD-SCDMA), long term evolution (LTE), BT, a GNSS, a WLAN, NFC, FM, an IR technology, and/or the like. The GNSS may include a global positioning system (GPS), a global navigation satellite system (GLONASS), a BeiDou navigation satellite system (BDS), a quasi-zenith satellite system (QZSS), and/or a satellite based augmentation system (SBAS).

The display 194 is configured to display a display interface of an application, and the like. The display 194 includes a display panel. The display panel may be a liquid crystal display (LCD), an organic light-emitting diode (OLED), an active-matrix organic light-emitting diode (AMOLED), a flexible light-emitting diode (FLED), a mini-LED, a micro-LED, a micro-OLED, a quantum dot light-emitting diode (QLED), or the like. In some embodiments, the electronic device may include one or N displays 194, where N is a positive integer greater than 1.

The electronic device 100 may implement a photographing function through the ISP, the camera 193, the video codec, the GPU, the display 194, the application processor, and the like. The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The internal memory 121 may be configured to store computer-executable program code. The executable program code includes instructions. The processor 110 runs the instructions stored in the internal memory 121 to perform various functional applications of the electronic device and data processing. The internal memory 121 may include a program storage region and a data storage region. The program storage region may store an operating system, software code of at least one application (for example, an iQIYI application or a WeChat application), and the like. The data storage region may store data (for example, an image or a video) generated in a process of using the electronic device, and the like. In addition, the internal memory 121 may include a high-speed random access memory, and may further include a nonvolatile memory, for example, at least one magnetic disk storage device, a flash storage device, and a universal flash storage (UFS).

The external memory interface 120 may be configured to connect to an external storage card, for example, a micro SD card, to extend a storage capability of the electronic device. The external storage card communicates with the processor 110 through the external memory interface 120, to implement a data storage function. For example, files such as a picture and a video are stored in the external storage card.

The electronic device may implement audio functions such as music play and recording through the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or some functional modules of the audio module 170 are disposed in the processor 110.

The speaker 170A, also referred to as a "loudspeaker", is configured to convert an audio electrical signal into a sound signal. The electronic device 100 may be used, through one or more speakers 170A, in sound play scenarios such as listening to music or receiving a hands-free call.

The receiver 170B, also referred to as an "earpiece", is configured to convert an audio electrical signal into a sound signal, and there may be one or more receivers 170B. When a call or voice information is received by using the electronic device 100, the receiver 170B may be put close to a human ear to listen to a voice. Generally, volume of the receiver 170B is lower than volume of the speaker 170A, to protect privacy of voices such as a call or voice information.

In some embodiments, the speaker 170A and/or the receiver 170B may include a single audio channel or a plurality of audio channels. In some embodiments, the plurality of audio channels are configured to provide stereo effect. In some other embodiments, the plurality of audio channels may be combined. For example, in dual audio channels, a left audio channel and a right audio channel may play same sound, so that volume is increased. A possible scenario is as follows: When a user answers a call in a noisy place, the user cannot clearly hear sound of a caller due to loud ambient sound. In this case, the user may enable a "mono audio" function of a mobile phone, and the "mono audio" function may be used to combine the plurality of audio channels to increase volume. There are a plurality of manners to enable the "mono audio". For example, the "mono audio" function is enabled in a Settings application. In some other embodiments, when the user answers a call in a noisy place, the user may further enable a "call noise cancellation" function. The "call noise cancellation" function means that when a call is answered by using the speaker 170A or the receiver 170B, the mobile phone filters out surrounding noise by using a noise canceling microphone on the back of the phone body, to improve call clarity and improve call quality for the user. There are a plurality of manners to enable the "call noise cancellation" function. For example, the function is woken up by using a voice or is enabled in a Settings application.

The microphone 170C, also referred to as a "mike" or a "mic", is configured to convert a sound signal into an electrical signal. When making a call or sending voice information, a user may make sound near the microphone 170C through the mouth of the user, to input a sound signal to the microphone 170C. At least one microphone 170C may be disposed in the electronic device 100. In some other embodiments, two microphones may be disposed in the electronic device 100, to collect a sound signal and implement a noise canceling function. In some other embodiments, three, four, or more microphones may alternatively be disposed in the electronic device 100, to collect a sound signal, implement noise canceling, recognize a sound source, implement a directional recording function, and the like.

The headset jack 170D is configured to connect to a wired headset. The headset jack may be a USB interface, or may be a 3.5 mm open mobile terminal platform (OMTP) standard interface or cellular telecommunications industry association of the USA (CTIA) standard interface.

The pressure sensor 180A is configured to sense a pressure signal, and may convert the pressure signal into an electrical signal. In some embodiments, the pressure sensor 180A may be disposed on the display 194.

The gyroscope sensor 180B may be configured to determine a motion posture of the electronic device. In some embodiments, angular velocities of the electronic device around three axes (that is, axes x, y, and z) may be determined by using the gyroscope sensor 180B. The gyroscope sensor 180B may be configured to implement image stabilization during photographing.

The barometric pressure sensor 180C is configured to measure barometric pressure. In some embodiments, the electronic device calculates an altitude based on a value of the barometric pressure measured by the barometric pressure sensor 180C, to assist in positioning and navigation.

The magnetic sensor 180D includes a Hall effect sensor. The electronic device may detect opening and closing of a flip leather case by using the magnetic sensor 180D. In some embodiments, when the electronic device is a flip phone, the electronic device may detect opening and closing of a flip cover by using the magnetic sensor 180D. Further, features such as automatic unlocking of the flip cover are set based on a detected opening or closing state of the leather case or a detected opening or closing state of the flip cover.

The acceleration sensor 180E may detect accelerations in various directions (usually on three axes) of the electronic device. When the electronic device is still, a magnitude and a direction of gravity may be detected. The acceleration sensor 180E may be further configured to recognize a posture of the electronic device, and is used in screen switching between a landscape mode and a portrait mode, a pedometer, or another application.

The distance sensor 180F is configured to measure a distance. The electronic device may measure a distance through infrared or laser. In some embodiments, in a photographing scenario, the electronic device may measure a distance by using the distance sensor 180F, to implement quick focusing.

The optical proximity sensor 180G may include, for example, a light-emitting diode (LED) and an optical detector, for example, a photodiode. The light-emitting diode may be an infrared light-emitting diode. The electronic device emits infrared light by using the light-emitting diode. The electronic device detects reflected infrared light from a nearby object by using the photodiode. When detecting sufficient reflected light, the electronic device may determine that there is an object near the electronic device. When detecting insufficient reflected light, the electronic device may determine that there is no object near the electronic device. The electronic device may detect, by using the optical proximity sensor 180G, that the user holds the electronic device close to an ear for a call, to automatically turn off a screen for power saving. The optical proximity sensor 180G may also be used in a leather case mode or a pocket mode to automatically unlock or lock the screen.

The ambient light sensor 180L is configured to sense ambient light brightness. The electronic device may adaptively adjust brightness of the display 194 based on the sensed ambient light brightness. The ambient light sensor 180L may also be configured to automatically adjust white balance during photographing. The ambient light sensor 180L may further cooperate with the optical proximity sensor 180G to detect whether the electronic device is in a pocket, to avoid an accidental touch.

The fingerprint sensor 180H is configured to collect a fingerprint. The electronic device may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device executes a temperature processing policy based on the temperature detected by the temperature sensor 180J. For example, when the temperature reported by the temperature sensor 180J exceeds a temperature threshold, the electronic device degrades performance of a processor near the temperature sensor 180J, to reduce power consumption and implement thermal protection. In some other embodiments, when the temperature is lower than another temperature threshold, the electronic device heats the battery 142, to avoid abnormal shutdown of the electronic device due to a low temperature. In some other embodiments, when the temperature is lower than still another temperature threshold, the electronic device boosts an output voltage of the battery 142, to avoid abnormal shutdown due to a low temperature.

The touch sensor 180K is also referred to as a "touch panel". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor 180K. The touch sensor may transfer the detected touch operation to the application processor to determine a type of the touch event. A visual output related to the touch operation may be provided on the display 194. In some other embodiments, the touch sensor 180K may alternatively be disposed on a surface of the electronic device at a location different from a location of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a human pulse, to receive a blood pressure beating signal.

The button 190 includes a power button, a volume button, and the like. The button 190 may be a mechanical button or a touch button. The electronic device may receive a button input, and generate a button signal input related to user settings and function control of the electronic device. The motor 191 may generate a vibration prompt. The motor 191 may be configured to provide an incoming call vibration prompt or touch vibration feedback. For example, touch operations performed on different applications (for example, photographing and audio play) may correspond to different vibration feedback effect. The indicator 192 may be an indicator light, and may be configured to indicate a charging status and a power change, or may be configured to indicate a message, a missed call, a notification, and the like. The SIM card interface 195 is configured to connect to a SIM card. The SIM card may be inserted into the SIM card interface 195 or removed from the SIM card interface 195, to implement contact with or separation from the electronic device.

It may be understood that components shown in FIG. 1 do not constitute a specific limitation on the electronic device. The electronic device in embodiments of the present invention may include more or fewer components than those in FIG. 1. In addition, a combination/connection relationship between the components in FIG. 1 may also be adjusted and modified.

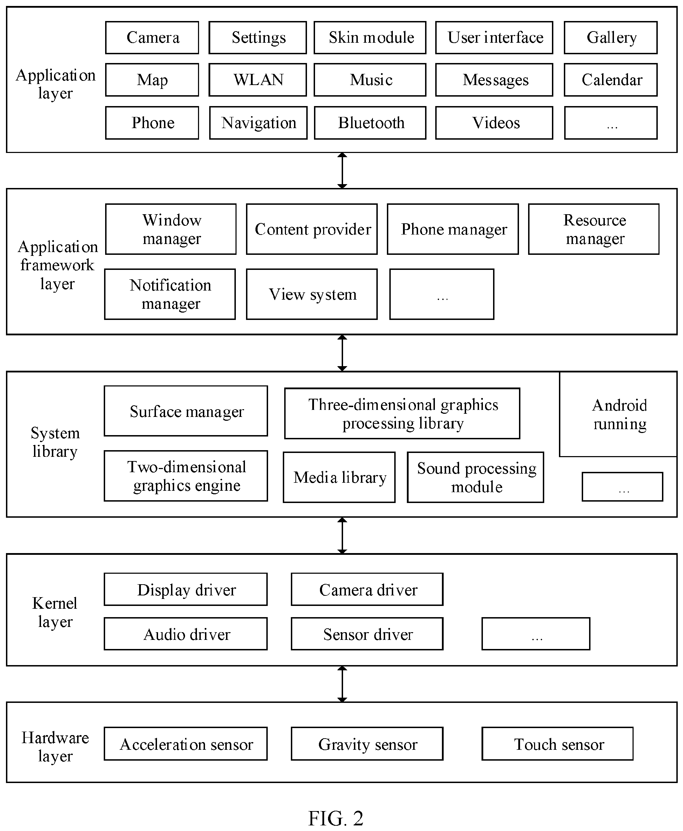

FIG. 2 is a block diagram of a software structure of an electronic device according to an embodiment of this application.

The software structure of the electronic device may be a layered architecture. For example, software may be divided into several layers, and each layer has a clear role and task. The layers communicate with each other through a software interface. It is assumed that the electronic device runs an Android system, and may include an application layer (which is briefly referred to as an app layer), an application framework layer (which is briefly referred to as a framework layer) (framework, FWK), a hardware layer, and the like.

Application packages may include applications such as Camera, Gallery, Calendar, Phone, Map, Navigation, WLAN, Bluetooth, Music, Videos, and Messages.

The application framework layer provides an application programming interface (API) and a programming framework for an application at the application layer. The application framework layer includes some predefined functions. For example, the application framework layer may include a window manager, a content provider, a view system, a phone manager, a resource manager, a notification manager, and the like. The window manager is used to manage a window program. The window manager may obtain a size of a display, determine whether there is a status bar, perform screen locking, take a screenshot, and the like. The content provider is used to store and obtain data, and enable the data to be accessed by an application. The data may include a video, an image, audio, calls that are made and answered, a browsing history and bookmarks, a phone book, and the like. The view system includes visual controls, such as a control for displaying text and a control for displaying a picture. The view system may be used to construct an application. A display interface may include one or more views. For example, a display interface including a short message service notification icon may include a view for displaying text and a view for displaying a picture. The phone manager is used to provide a communication function for the electronic device 100, for example, management of a call status (including answering, declining, or the like). The resource manager provides various resources such as a localized character string, an icon, a picture, a layout file, and a video file for an application. The notification manager enables an application to display notification information in a status bar, and may be used to convey a notification message. The notification manager may automatically disappear after a short pause without requiring user interaction. For example, the notification manager is used to notify download completion, provide a notification, and the like. The notification manager may alternatively be a notification that appears in a top status bar of the system in a form of graph or scroll bar text, for example, a notification of a background application, or may be a notification that appears on a screen in a form of dialog window. For example, text information is displayed in the status bar, an alert tone is played, the electronic device vibrates, or an indicator light blinks.

Android runtime includes a kernel library and a virtual machine. The Android runtime is responsible for scheduling and management of the Android system. The kernel library includes two parts: a function that needs to be called in Java language, and a kernel library of Android. The application layer and the application framework layer run on the virtual machine. The virtual machine executes Java files of the application layer and the application framework layer as binary files. The virtual machine is used to implement functions such as object lifecycle management, stack management, thread management, security and abnormality management, and garbage collection. A system library may include a plurality of functional modules, for example, a surface manager, a media library, a three-dimensional graphics processing library (for example, OpenGL ES), and a 2D graphics engine (for example, SGL). The surface manager is used to manage a display subsystem, and provide fusion of 2D and 3D layers for a plurality of applications. The media library supports playback and recording in a plurality of commonly used audio and video formats, static image files, and the like. The media library may support a plurality of audio and video coding formats, for example, MPEG-4, H.264, MP3, AAC, AMR, JPG, and PNG. The three-dimensional graphics processing library is used to implement three-dimensional graphics drawing, image rendering, compositing, layer processing, and the like. The 2D graphics engine is a drawing engine for 2D drawing.

In some other embodiments, the system library may further include a sound processing module, used to adjust a volume curve. It should be noted that, the sound processing module may be a module in the system library, or may be a module at another layer, for example, a module at the application framework layer or a kernel layer.

The kernel layer is a layer between hardware and software. The kernel layer includes at least a display driver, a camera driver, an audio driver, and a sensor driver.

The following uses the software structure shown in FIG. 2 as an example to describe a volume adjustment procedure of the electronic device 100.

For example, when a user adjusts sound by touching the display, a touch sensor at the hardware layer detects a touch operation, and generates an event interrupt. The event interrupt includes time information, location information, an operation type, and the like of the touch operation. The hardware layer reports the event interrupt to a higher layer, for example, the application framework layer or the system library, and the higher layer determines, based on the time information, the location information, the operation type, and the like of the touch operation, a button on which the operation is performed and a function of the operation. When it is determined that the operation is used to adjust a volume level range, a processing instruction is sent to the sound processing module in the system library. The sound processing module is used to adjust a volume curve, and the volume curve is a curve based on which the electronic device adjusts a volume level. After obtaining a volume curve, the sound processing module delivers the volume curve to the audio driver at the kernel layer, so that the audio driver controls, based on the volume curve, a sound output module (for example, the speaker 170A and/or the receiver 170B) at the hardware layer to output sound.

An example in which the electronic device 100 is a mobile phone is used below to describe in detail the volume adjustment method in this application with reference to the accompanying drawings.

To improve user experience, the electronic device has a sound output function. For example, sound may be output in scenarios such as an incoming call, multimedia play, and touch feedback. In some embodiments, the electronic device further has a volume adjustment function, to be specific, a user can adjust volume of sound output by the electronic device.

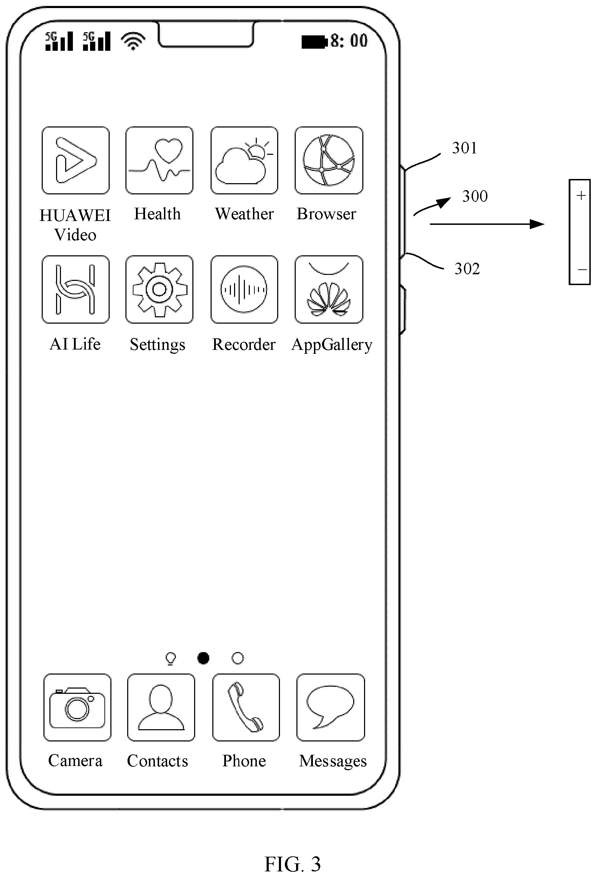

For example, the electronic device includes a volume adjustment button, and the volume adjustment button is configured to adjust volume. The volume adjustment button may be a physical button or a virtual button. This is not limited in this application. In addition, a location of the volume adjustment button on the electronic device is not limited in this application. For example, the volume adjustment button may be located on a front side (that is, a side on which a display is located), a back side (that is, a side opposite to the side on which the display is located), or a side edge of the electronic device. For example, as shown in FIG. 3, a volume adjustment button 300 is disposed on a right side edge of the electronic device. It should be understood that, in FIG. 3, an example in which the volume adjustment button 300 is located on the right side edge is used. Actually, the volume adjustment button 300 may alternatively be located on a left side edge, an upper side edge, a lower side edge, or the like. It should be noted that, an example in which volume is adjusted by using the volume adjustment button 300 is mainly used herein. Actually, another volume adjustment manner may be further included. For example, the volume is adjusted by using a voice instruction. For example, when detecting a voice instruction of "increasing the volume", the electronic device increases the volume, or when detecting a voice instruction of "decreasing the volume", the electronic device decreases the volume. In some embodiments, after adjusting the volume, the electronic device may further output a voice prompt, for example, "the volume is increased by one level" or "the volume is decreased by one level".

In some embodiments, for ease of operation by the user, the volume adjustment button may include a volume up button and a volume down button. The volume up button is configured to increase volume. The volume down button is configured to decrease volume. Still refer to FIG. 3. The volume adjustment button 300 includes a volume up button 301 and a volume down button 302. When it is detected that the user triggers the volume up button 301, volume is increased. When it is detected that the user triggers the volume down button 302, volume is decreased. For ease of differentiation by the user, the volume up button 301 may be marked with "+", and the volume down button 302 may be marked with "-".

In some embodiments, volume may be adjusted level by level when the electronic device adjusts the volume. For example, when the user presses the volume up button 301 once, the volume is increased by one level, and when the user presses the volume up button 301 again, the volume is further increased by one level.

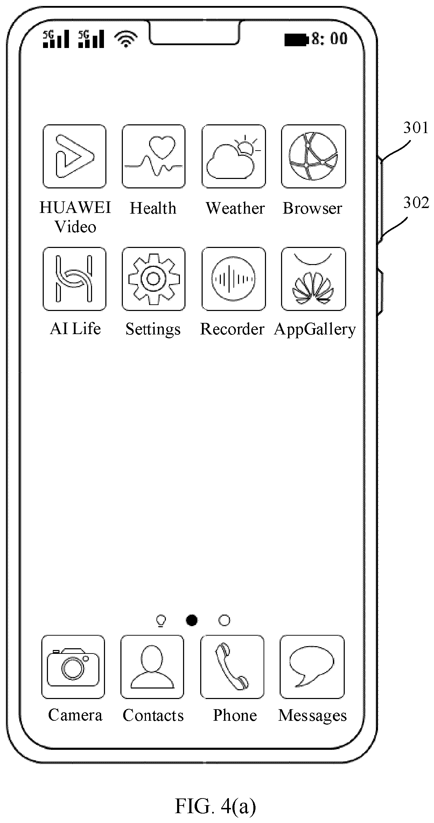

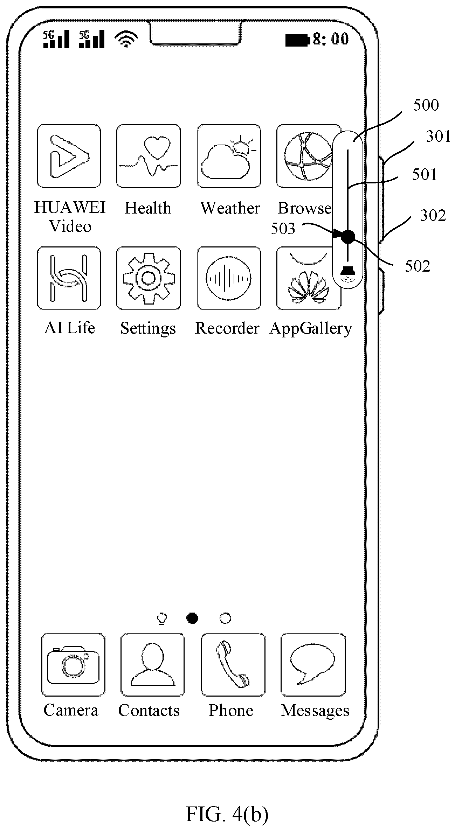

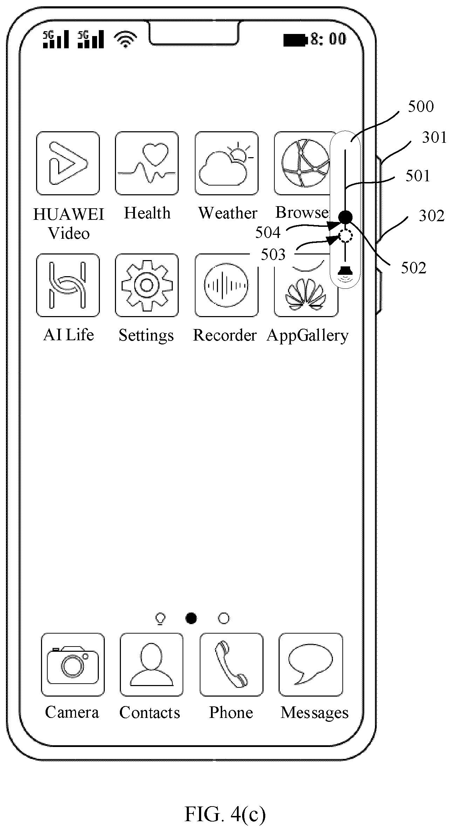

For ease of prompting the user, the electronic device may display a change of a volume level. For example, as shown in FIG. 4(a), the electronic device displays a home screen (home screen). When detecting an operation performed on the volume up button 301, the electronic device may display an interface shown in FIG. 4(b). The interface includes a volume prompt box 500. The volume prompt box 500 is used to prompt current volume. For example, the volume prompt box 500 includes a progress bar, and progress indicated by the progress bar is used to describe the current volume. The progress bar may be of various types. For example, FIG. 4(b) shows an example of the progress bar. The progress bar includes a volume bar 501 and a prompt point 502. The prompt point 502 may be set at an upper layer of the volume bar 501 in a movable manner, and a location (that is, progress) of the prompt point 502 on the volume bar 501 may indicate a volume level. For example, during volume adjustment, a higher location of the prompt point 502 on the volume bar 501 indicates a higher volume level. For example, in FIG. 4(b), the prompt point 502 is located at a location 503 on the volume bar 501. In this case, if the electronic device detects an operation performed on the volume up button 301, an interface shown in FIG. 4(c) is displayed. In the interface, the prompt point 502 is located at a location 504. The location 504 is higher than the location 503, indicating that the volume level becomes higher. For ease of understanding, the location 503 is marked with a dashed line in FIG. 4(c). In some embodiments, in addition to adjusting the location of the prompt point 502 on the volume bar 501 by using the volume adjustment button 300, the location of the prompt point 502 on the volume bar 501 may also be changed by dragging the prompt point 502, or the location of the prompt point 502 on the volume bar 501 may also be changed by using a voice instruction, to implement volume adjustment.

For example, the electronic device may include N volume levels, where N is an integer greater than or equal to 2.

Each of the N levels may correspond to a volume value. For example, N=5, a lowest level is a level 1 and may correspond to a volume value of 5 dB, and a highest level is a level 5 and may correspond to a volume value of 25 dB. It should be noted that, a value (for example, 5 dB or 25 dB) in this specification is merely an example, and does not constitute a limitation on the solution. It may be understood that, when N=5, in FIG. 4(a) to FIG. 4(c), starting from the lowest level, the prompt point 502 needs to move on the volume bar 501 five times to reach the highest level. A movement step of each time may be related to a volume difference between two adjacent levels. A larger volume difference may indicate a larger movement step. For example, if a volume difference between the level 1 and a level 2 is 5 dB, a distance (for example, a first distance) corresponding to 5 dB is moved, and if a volume difference between the level 2 and a level 3 is 10 dB, a distance (for example, a length of two first distances) corresponding to 10 dB is moved.

In some embodiments, the electronic device may store a correspondence between a volume level and a volume value. When detecting a volume adjustment operation (for example, a tap operation performed on the volume adjustment button or a drag operation performed on the prompt point 502), the electronic device performs adjustment based on the correspondence. For example, when detecting a tap operation performed on the volume up button 301, the electronic device determines a next higher volume level of a current volume level, then determines, based on the correspondence, volume corresponding to the next higher volume level, and performs adjustment to reach the volume. For example, correspondences between volume levels and volume values may be shown in Table 1.

**Table 1: Correspondences between volume levels and volume values**

| Volume level | Volume (unit: decibel (dB)) |
|---|---|
| Level 1 | 5 dB |
| Level 2 | 10 dB |
| ... | ... |
| Level 5 | 25 dB |

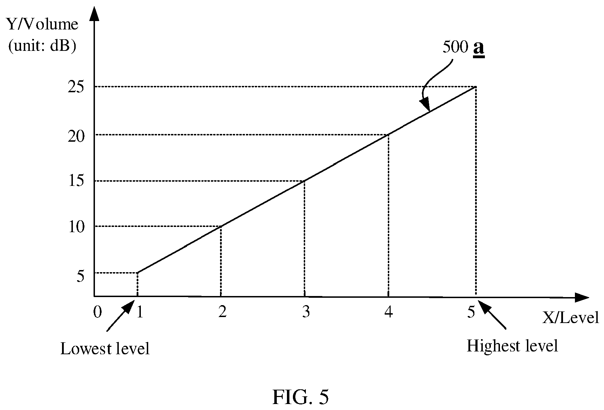

It should be noted that, in Table 1, an example in which there are five volume levels in total is used, that is, from the level 1 to the level 5. It should be understood that more or fewer levels may alternatively be included. It should be noted that, in addition to the form of Table 1, the correspondences between the volume levels and the volume values may be in a form of function, curve, or the like, for example, a volume curve 500a shown in FIG. 5. In an embodiment shown in FIG. 5, volume differences between two adjacent levels are equal. For example, the volume differences between two adjacent levels are all 5 dB. In another embodiment, volume differences between two adjacent levels may alternatively be not equal. For example, a volume difference between the level 1 and the level 2 is 4 dB, and a volume difference between the level 2 and the level 3 is 6 dB. The volume curve 500a is in an X-Y coordinate system, where X indicates a volume level, and Y indicates a volume value (for example, the unit is decibel (dB)). It may be understood that, in FIG. 5, an example in which the curve 500a is a straight line is used. It should be understood that the curve 500a may alternatively be a curved line with a specific radian. This is not limited in embodiments of this application.

It should be noted that, the foregoing volume adjustment manners (for example, volume adjustment through a tap operation performed on the volume adjustment button or a drag operation performed on the prompt point 502) are applicable to the speaker 170A, the receiver 170B, an external sound output device, and the like. The external sound output device includes a headset, an external speaker (for example, a wireless sound box), and the like. This is not limited in this application.

Still refer to FIG. 5. The volume curve 500a includes a level range, a volume range, and volume adjustment precision. The level range is a value range of a horizontal coordinate X of the volume curve 500a (for example, from the level 1 to the level 5). The volume range is a value range of a vertical coordinate Y of the volume curve 500a (for example, from 5 dB to 25 dB). The volume adjustment precision is a slope of the volume curve 500a, that is, a volume difference between two adjacent levels. For example, a slope between the level 1 and the level 2 is 5 dB/level.

In some embodiments, the volume curve 500a is fixed. For example, a volume difference between levels is fixed, or a slope between levels is fixed, or the level range (that is, the value range of X) is fixed, or the volume range (that is, the value range of Y) is fixed. In a possible case, a volume curve is configured before the electronic device is delivered from a factory, and the volume curve cannot be adjusted. However, in some cases, such a fixed volume curve cannot satisfy requirements of different users.

For example, a user A has sensitive hearing, and is accustomed to relatively low volume. Generally, only a low level of the electronic device is used, and a high level is rarely used. In some cases (for example, currently in a quiet environment), when adjusting volume to the lowest level (for example, the level 1), the user A still feels that the volume is excessively high and cannot have comfortable experience.

For another example, a user B has insensitive hearing, and is accustomed to relatively high volume. Generally, only a high level of the electronic device is used, and a low level is rarely used. In some cases (for example, currently in a noisy environment), when adjusting volume to the highest level (for example, the level 5), the user B still feels that the volume is excessively low and has poor experience.

For another example, when adjusting volume, a user C switches between the level 1 and the level 2. The user C feels that sound at the level 1 is excessively low and sound at the level 2 is excessively high, and cannot find suitable volume.

Therefore, to satisfy requirements of different users, in some embodiments, the volume curve can be adjusted. For example, at least one of a level range, a volume range, and volume adjustment precision (a volume difference between levels) can be adjusted.

For example, the electronic device has N volume levels before delivery, and the electronic device may adjust the N volume levels to M volume levels, where M and N may be the same or different, and both M and N are positive integers. For example, the electronic device has five levels in total before delivery, and after adjustment, the electronic device has four levels or six levels.

For another example, volume corresponding to a lowest level of the electronic device before delivery is 5 dB, and after adjustment, the lowest level corresponds to 3 dB. In this way, selection of lower volume is provided for the user A who is sensitive to sound, to improve experience.

For another example, a highest level of the electronic device corresponds to 25 dB before delivery, and after adjustment, the highest level corresponds to 30 dB. In this way, selection of higher sound is provided for the user B who is insensitive to sound, to improve experience.

For another example, the electronic device may further increase or decrease a volume span between two adjacent levels. For example, a volume difference between two adjacent levels (for example, a level 1 and a level 2) of the electronic device is 5 dB before delivery, and after adjustment, a volume difference between the two adjacent levels (for example, the level 1 and the level 2) is 3 dB. In this way, for the user C, intermediate volume of the level 1 and the level 2 can be selected, and comfort degree is improved. In some cases, a user D may alternatively adjust a volume difference between the level 1 and the level 2 to 7 dB, and/or adjust a volume difference between a level 3 and a level 4 to 3 dB.

**Embodiment 1**

In an implementation, an electronic device provides a first interface, and a user may adjust at least one of a level range, a volume range, and volume adjustment precision in the first interface.

For example, the first interface may be an interface of a Settings application of the electronic device.

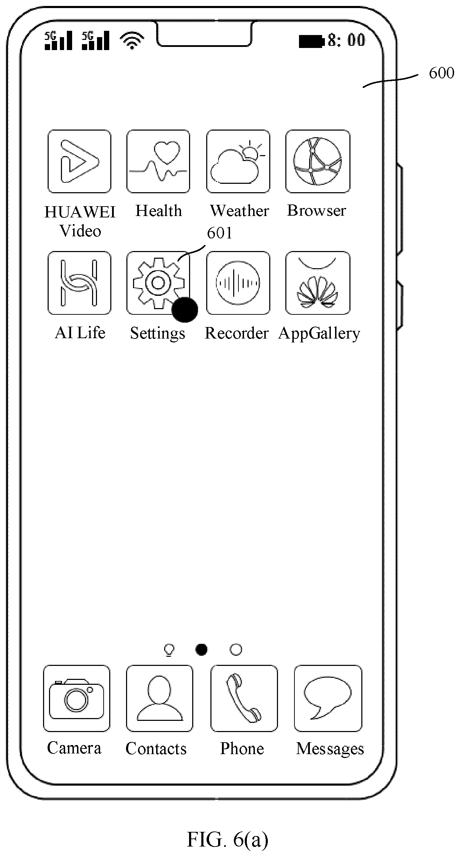

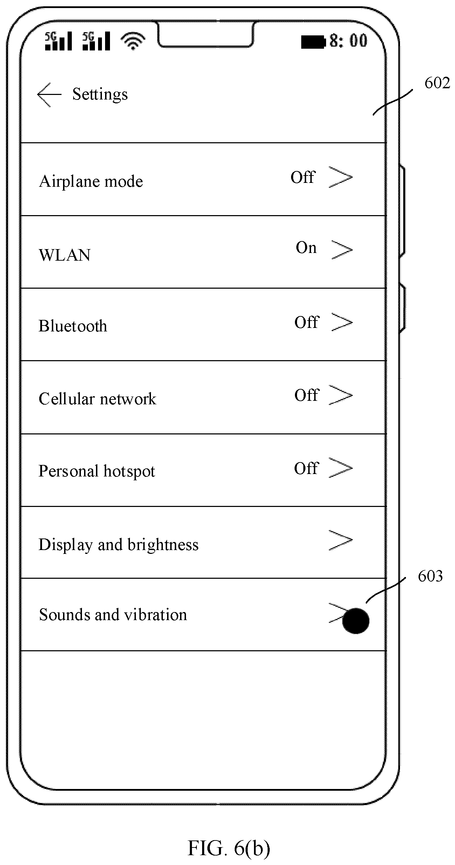

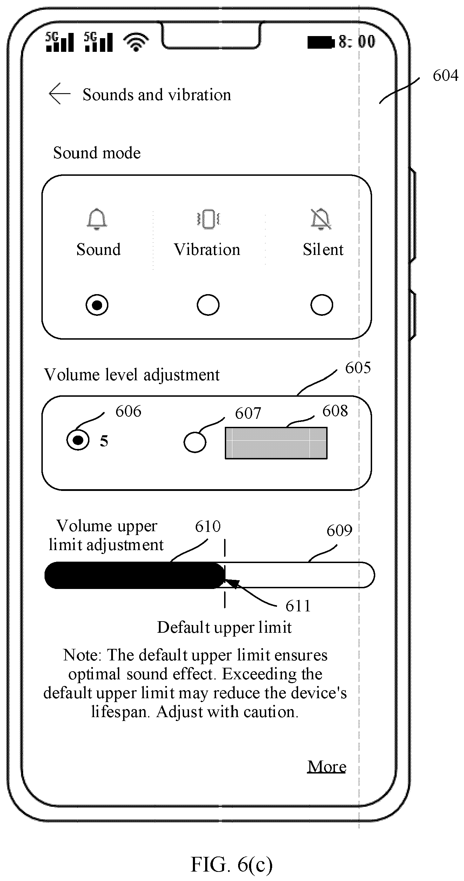

For example, refer to FIG. 6(a). The electronic device displays a home screen 600. The home screen 600 includes an icon 601 of the Settings application. When detecting an operation performed on the icon 601, the electronic device displays a Settings interface 602 shown in FIG. 6(b). The Settings interface 602 includes a Sounds and vibration option 603. When detecting an operation performed on the Sounds and vibration option 603, the electronic device displays a Sounds and vibration setting interface 604 shown in FIG. 6(c). The interface 604 includes a Volume level adjustment window 605 and a Volume upper limit adjustment box 609. The Volume level adjustment window 605 is used to adjust a volume level (that is, a value range of X of a volume curve), and the Volume upper limit adjustment box 609 is used to adjust a volume range (that is, a value range of Y of the volume curve).

The Volume level adjustment window 605 includes an option 606 and an option 607. The option 606 corresponds to a default highest level, and the default highest level is a highest level configured before the electronic device is delivered from a factory, for example, the highest level 5 corresponding to the volume curve 500a in FIG. 5. The option 607 is used for the user to customize a highest level. For example, an input box 608 is used for the user to input the customized highest level. Only one of the option 606 and the option 607 is selected at a time. When the option 606 is selected, the option 607 is automatically deselected; or when the option 607 is selected, the option 606 is automatically deselected.

The Volume upper limit adjustment box 609 includes a line 610. The line 610 is filled in the Volume upper limit adjustment box 609 in a scalable manner. A longer length of the line 610 indicates a larger volume upper limit value.

In a default case (for example, before delivery), the option 606 in the Volume level adjustment window 605 is selected, the option 607 is not selected, and the input box 608 is in an uneditable state (for example, displayed in grayscale). In addition, the line 610 in the Volume upper limit adjustment box 609 is located at a location 611, and indicates a default upper limit value, for example, the highest volume 25 dB corresponding to the volume curve 500a in FIG. 5.

The following describes a process of adjusting the level range, the volume range, and the volume adjustment precision by using the interface 604.

I. Volume range adjustment

For ease of understanding, an example in which the level range remains unchanged and the volume range is adjusted is first used. In other words, the value range of X remains unchanged and the value range of Y is adjusted.

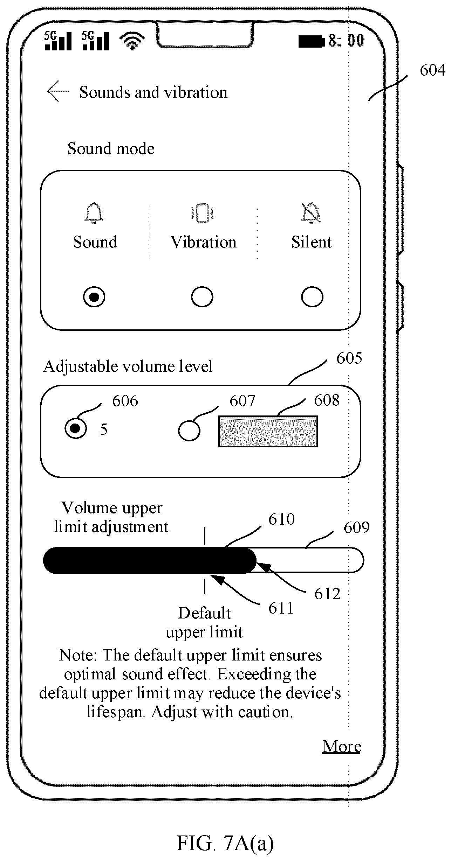

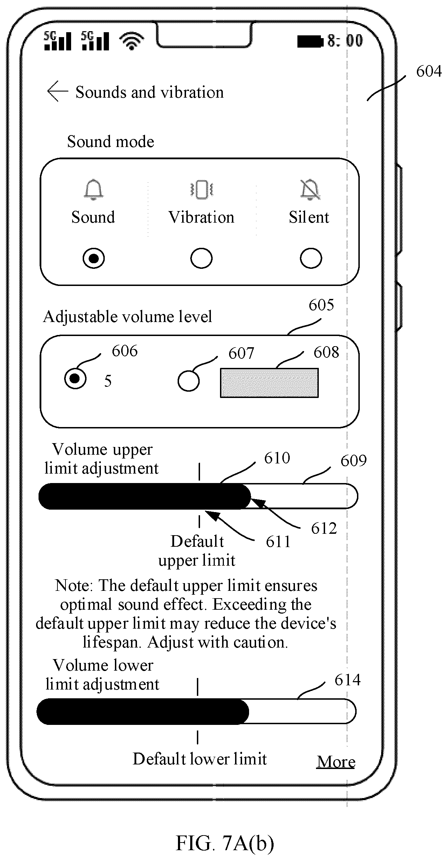

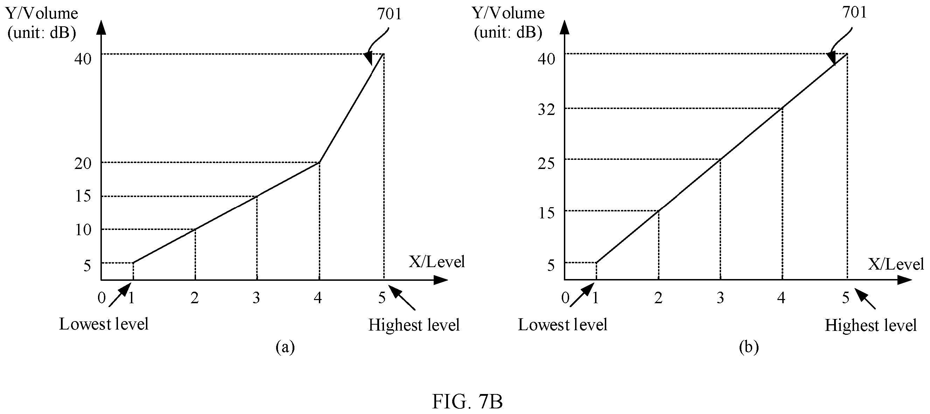

For example, still refer to FIG. 6(c). When detecting an operation used to adjust the line 610 (for example, an operation of moving an end of the line 610 rightward), the electronic device displays an interface shown in FIG. 7A(a). The line 610 is located at a location 612 in the interface. The location 612 is on the right of the location 611, indicating that the volume upper limit value is increased. A specific increase amount is related to a distance between the location 612 and the location 611. A larger distance indicates a larger increase amount. In an implementation, the electronic device stores a relationship between a distance value and a volume value. A volume value corresponding to the distance between the location 612 and the location 611 may be determined based on the correspondence, and the volume value is a volume value that needs to be increased. For example, the volume upper limit value is 25 dB by default, and when it is determined based on the correspondence that the volume value corresponding to the distance between the location 612 and the location 611 is 15 dB, an adjusted volume upper limit value is 40 dB. For example, refer to (a) in FIG. 7B. A volume curve 701 obtained after the volume upper limit value is adjusted is shown. It can be learned from a comparison between the curve 701 and the curve 500a (a default curve) in FIG. 5 that, the level range remains unchanged, and the volume range is adjusted to 5 dB to 40 dB. In other words, the value range of the horizontal coordinate is unchanged, and the value range of the vertical coordinate is changed. It should be noted that, volume values corresponding to a level 1 to a level 4 on the curve 701 in (a) in FIG. 7B remain unchanged, and only a volume value corresponding to a level 5 is adjusted to 40 dB. In some other embodiments, the volume values corresponding to the level 1 to the level 4 may alternatively be changed, for example, as shown in (b) in FIG. 7B, provided that the volume range (that is, the range of the vertical coordinate Y) is 5 dB to 40 dB.

In FIG. 7A(a) and FIG. 7B, an example in which the level range remains unchanged and the volume upper limit value is adjusted is used. It may be understood that a volume upper limit value may be further adjusted, and a principle is the same as the principle of adjusting the volume upper limit value. For example, refer to FIG. 7A(b). The interface 604 further includes a Volume lower limit adjustment box 614, and the Volume lower limit adjustment box 614 is used to adjust a volume lower limit value, that is, volume corresponding to a lowest level. In other words, both the volume upper limit value and the volume lower limit value can be adjusted according to a requirement of the user.

II. Volume level adjustment

For ease of understanding, an example in which the volume range remains unchanged and the volume level is adjusted is first used. In other words, the value range of Y remains unchanged and the value range of X is adjusted.

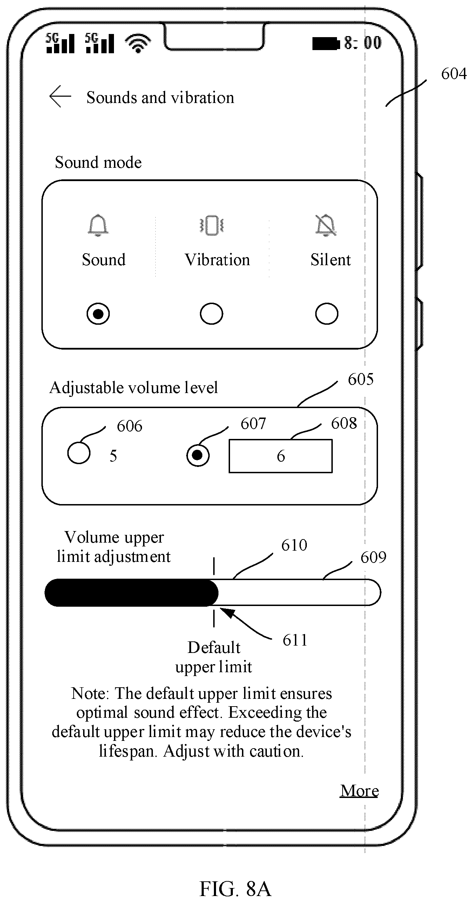

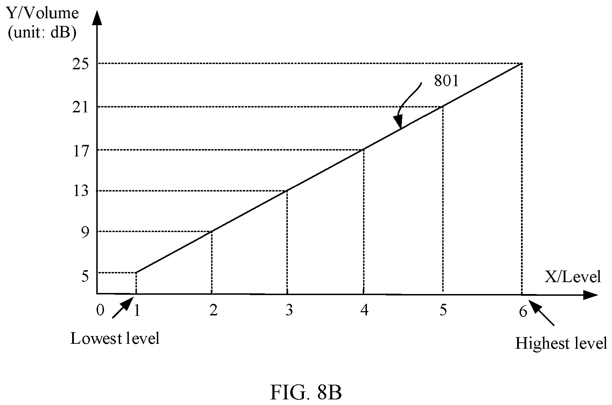

For example, still refer to FIG. 6(c). When the electronic device detects that the option 607 in the Volume level adjustment window 605 is selected, the input box 608 enters an editable state. Refer to FIG. 8A. The user may input a highest level to the input box 608. For example, the user inputs 6, and the electronic device adjusts the highest level to a level 6. After the highest level is adjusted to the level 6, a corresponding curve is shown in (a) in FIG. 8B, that is, an adjusted volume curve 801. Compared with the curve 500a in FIG. 5, on the curve 801, the volume level of the horizontal coordinate is increased to the level 6, but the range of the vertical coordinate remains unchanged. In this case, a volume value corresponding to each level may be correspondingly adjusted.

In FIG. 8A and FIG. 8B, an example in which the volume range remains unchanged and the volume level is increased is used. It may be understood that the volume range may alternatively be decreased. For example, the default highest level is decreased from the level 5 to the level 4. An implementation principle thereof is similar, and details are not described again.

It may be understood that the foregoing uses examples in which one of two parameters, namely, the volume level and the volume range, remains unchanged and the other parameter is adjusted. In some other embodiments, the two parameters may be adjusted together.

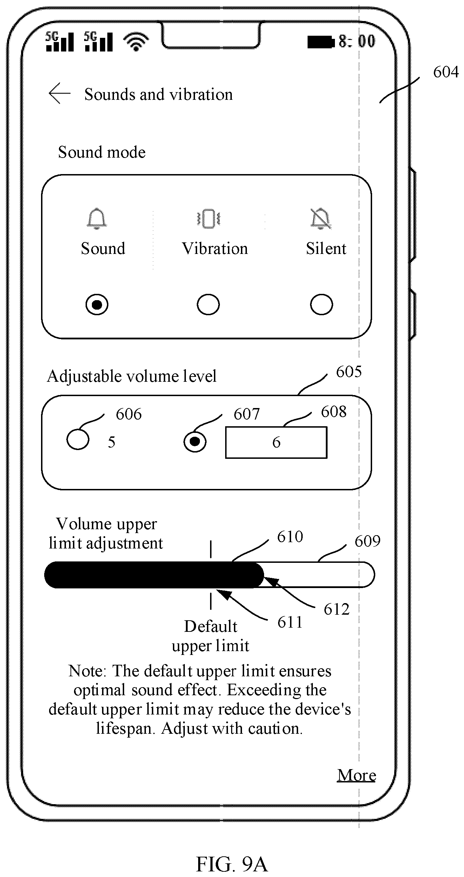

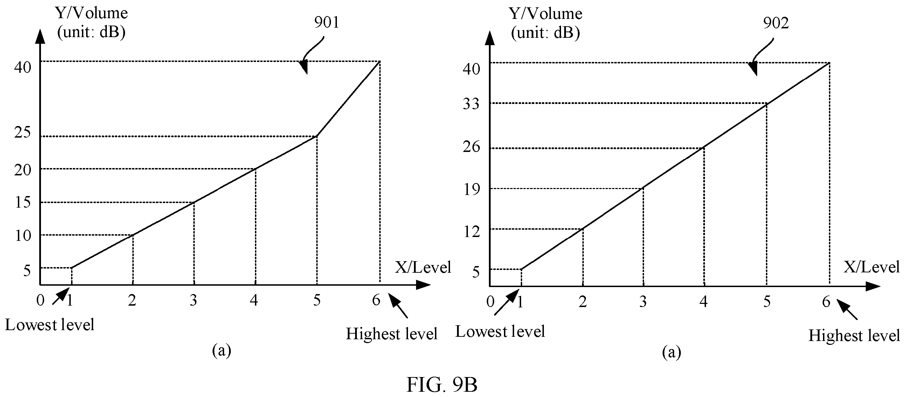

For example, still refer to FIG. 8A. When the electronic device adjusts the highest level to the level 6, the line 610 may remain unchanged, and when the electronic device detects an adjustment operation (for example, a rightward drag operation) performed by the user on the line 610, the electronic device increases the volume upper limit value. For example, refer to FIG. 9A. As shown in FIG. 9A, the line 610 is moved rightward to a location 612. In other words, the user adjusts the highest level and the volume upper limit value. It is assumed that an increased volume value is 15 dB. Refer to (a) in FIG. 9B. An adjusted volume curve 901 is shown. Compared with the curve 500a in FIG. 5, on the curve 901, the highest level is adjusted to the level 6, and the volume range is adjusted to 5 dB to 40 dB. It should be noted that, volume values corresponding to a level 1 to a level 5 on the curve 901 in (a) in FIG. 9B remain unchanged, and only a volume value corresponding to the level 6 is adjusted to 40 dB. In some other embodiments, the volume values corresponding to the level 1 to the level 5 may alternatively be changed, for example, as shown in (b) in FIG. 9B, provided that the volume range (that is, the range of the vertical coordinate Y) is 5 dB to 40 dB.

Still refer to FIG. 9A. In some other embodiments, when detecting that the highest level is adjusted to the level 6, the electronic device may automatically adjust the line 610 to the location 612. In other words, when the user increases the highest level, the volume upper limit value is correspondingly increased.

III. Volume adjustment precision adjustment

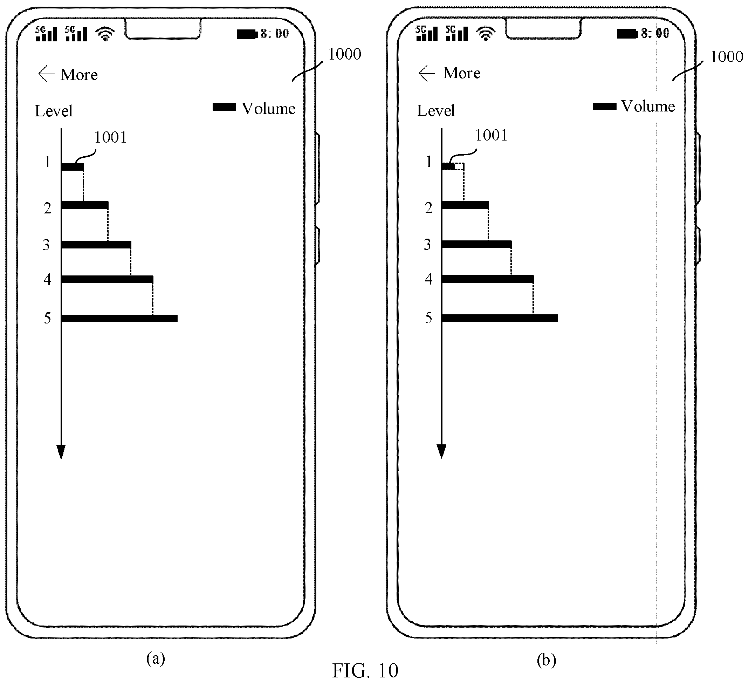

Still refer to FIG. 6(c). The interface 604 includes a More button. When detecting an operation performed on the More button, the electronic device displays an interface 1000 shown in (a) in FIG. 10. The interface 1000 includes level identities (for example, a level 1 to a level 5), and a volume bar corresponding to each level. A longer volume bar indicates higher volume. For example, as shown in (a) in FIG. 10, the electronic device detects an operation of adjusting a volume bar 1001 corresponding to the level 1, and displays an interface shown in (b) in FIG. 10. In the interface, the volume bar 1001 corresponding to the level 1 is shortened, indicating that volume corresponding to the level 1 is decreased.

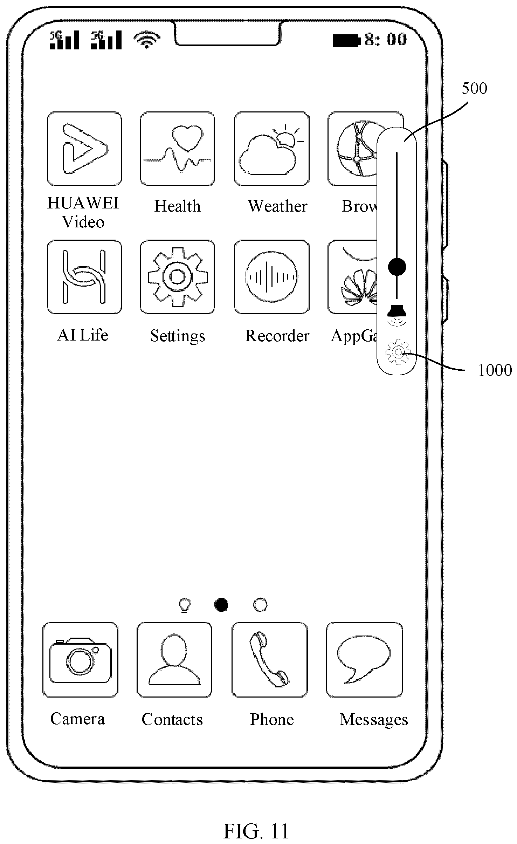

In the foregoing embodiment, an example in which the user opens the interface 604 by using the Settings application and adjusts the volume curve in the interface 604 is used. In some other embodiments, the interface 604 may alternatively be opened in another manner. For example, refer to FIG. 11. A volume prompt box 500 includes a setting icon 1000. When detecting an operation (for example, a tap operation) performed on the icon 1000, the electronic device opens the interface 604. Alternatively, when detecting a voice instruction that indicates volume adjustment, the electronic device opens the interface 604. In conclusion, a specific manner of opening the interface 604 is not limited in this application. In addition, it should be noted that, the interface 604 provided above is merely an example. In actual design, the interface 604 may be designed in another form. This is not limited in embodiments of this application.

**Embodiment 2**

In Embodiment 1, an example in which the user adjusts the volume curve in the first interface is used. In Embodiment 2, an electronic device may automatically adjust a volume curve.

For ease of understanding, the following uses an example in which a default volume curve is the volume curve 500a in FIG. 5 for description.

I. Automatic adjustment of a volume range

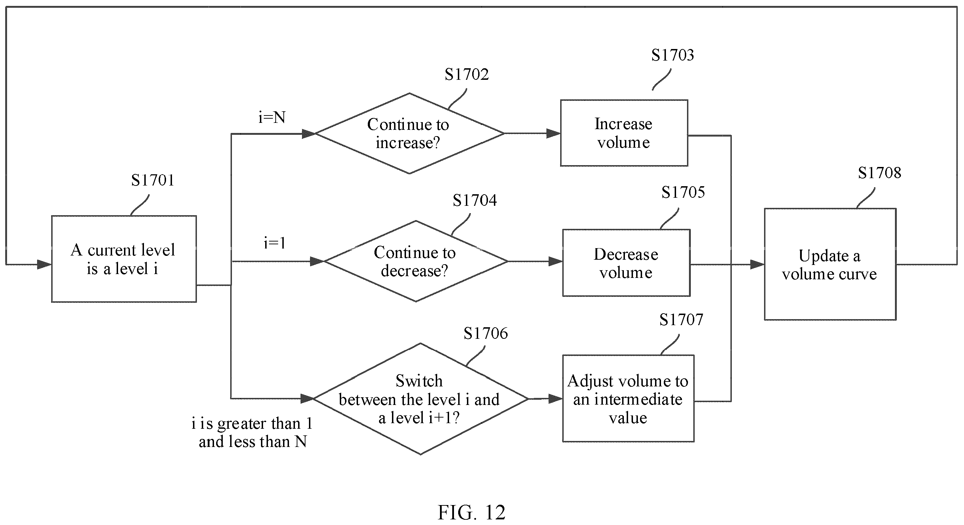

For ease of understanding, an example in which a level range of the electronic device remains unchanged and a volume range is adjusted is used. For example, the electronic device includes N volume levels by default. Adjusting the volume range may include adjusting volume corresponding to any one of the N levels, for example, volume corresponding to a highest level and volume corresponding to a lowest level. For a specific implementation process, refer to FIG. 12. As shown in FIG. 12, the process includes the following steps.

S1701: The electronic device determines that a current volume level is a level i, where i is any positive integer from 1 to N.

For ease of understanding, the following describes different cases, including three cases: i=N, i=1, and i is greater than 1 and less than N. When i=N, it indicates that the current volume level is the highest level, and an implementation process includes S1702 and S1703. When i=1, it indicates that the current volume level is the lowest level, and an implementation process includes S1704 and S1705. When i is greater than 1 and less than N, an implementation process includes S1706 to S1709.

S1702: When i=N, the electronic device detects a first preset operation performed on a volume up button.

The first preset operation may be an operation of pressing and holding a volume up button 301, or an operation of pressing a volume up button 301 a preset quantity of times within preset duration. A possible scenario is as follows: The highest level of the electronic device is already reached, but a user feels that the volume corresponding to the highest level is not high enough, and still wants to continue to increase the volume. Therefore, the user continues to press the volume up button 301.

S1703: The electronic device increases volume to first volume, where the first volume is higher than volume corresponding to the level N.

For example, N=5. To be specific, the highest level is a level 5 by default, and volume corresponding to the level 5 is 25 dB. Then, the first volume is higher than 25 dB. In some embodiments, the first volume may be any volume value higher than 25 dB. Alternatively, the first volume may be obtained in a specific calculation manner. For example, the first volume is obtained according to the following formulas. The formulas satisfy:

$$Y1 = f(x_{\max}) + P \qquad (1)$$

$$P = \frac{f(x_{\max}) - f(x_1)}{x_{\max} - x_1} \qquad (2)$$

Y1 indicates the first volume, X indicates a volume level, $x_{\max}$ indicates a default highest level, for example, the level 5, and $f(x_{max})$ indicates a volume value corresponding to the highest level, that is, a vertical coordinate corresponding to the level 5 on a volume curve. $x_1$ indicates a level 1, and $f(x_1)$ indicates a volume value corresponding to the level 1, that is, a vertical coordinate corresponding to the level 1 on the volume curve.

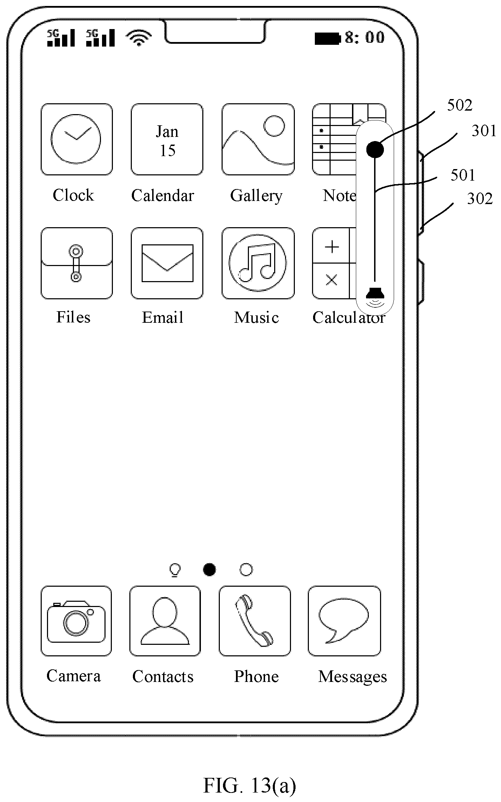

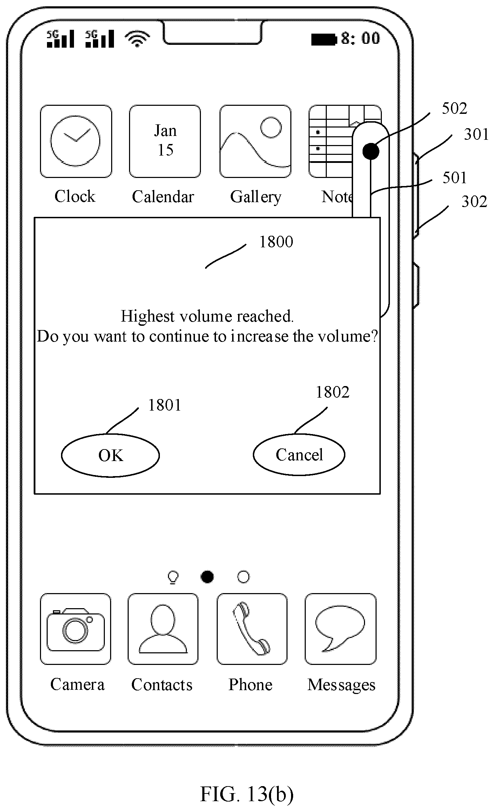

In some embodiments, before S1703, first prompt information may be further output. The first prompt information is used to prompt the user that the default highest level is reached currently and whether to continue to increase the volume. If the electronic device receives a confirmation instruction, S1703 is performed. For example, as shown in FIG. 13(a), highest volume of the electronic device is already reached, that is, a prompt point 502 is already located at a highest point of a prompt bar. In this case, if the electronic device detects the first preset operation performed on the volume up button 301, the electronic device displays an interface shown in FIG. 13(b). Prompt information 1800 is displayed in the interface. The prompt information 1800 is used to prompt that the highest volume is already reached and whether to continue to increase the volume. The electronic device may further display an OK button 1801 and a Cancel button 1802. When detecting an operation of triggering the OK button 1801 by the user, the electronic device increases the volume to the first volume (that is, the volume obtained through calculation according to the foregoing formulas). Alternatively, when detecting an operation of triggering the OK button 1801 by the user, the electronic device displays the interface 604 shown in FIG. 7A(a) or FIG. 7A(b). The user may perform manual adjustment in the interface 604. When detecting an operation of triggering the Cancel button 1802 by the user, the electronic device does not increase the volume.

In some embodiments, when the electronic device increases the volume to the first volume, the electronic device may adjust the volume corresponding to the level N to the first volume, that is, adjust a vertical coordinate corresponding to the level N on the volume curve to a value of the first volume. Alternatively, when detecting that a quantity of historical times of increasing the volume to the first volume when the volume is at the level N is greater than a first preset quantity of times, the electronic device adjusts the volume corresponding to the level N to the first volume.

In some other embodiments, after the electronic device increases the volume corresponding to the highest level to the first volume, if the user still feels that the volume is not high enough, the volume corresponding to the highest level may continue to be increased. A principle of a manner of continuing to increase the volume is the same as the principle of the manner in S1703, and details are not described again. It should be noted that, limited by a hardware function, a sound output module (for example, a speaker 170A or a receiver 170B) has a volume upper limit, and cannot increase volume without limitation. Therefore, in some embodiments, the electronic device stores a threshold of the sound output module. The threshold is highest volume that can be borne by hardware of the sound output module (for example, the speaker 170A or the receiver 170B). If volume exceeds the threshold, the hardware is damaged. Therefore, if the threshold is about to be reached when the electronic device adjusts the volume of the highest level, the volume may continue to be increased in another manner, to ensure that the volume does not exceed the threshold and the hardware is not damaged. A scenario in which an incoming call is answered by using a speaker is used as an example. The electronic device has A speakers, where A is a positive integer. When an incoming call is answered, only B speakers are turned on, where B is a positive integer less than A. When the volume corresponding to the highest level needs to be increased, volume of the B speakers may be increased first. If the volume of the B speakers is about to reach a threshold, at least one of Manner 1 to Manner 3 may be used.

Manner 1: One or more speakers may be further turned on, that is, a quantity of speakers is increased, to increase the volume.

Manner 2: A plurality of audio channels are combined, for example, a left audio channel and a right audio channel output same sound, to increase the volume.

Manner 3: A "call noise cancellation" function may be enabled, to filter out surrounding noise, improve clarity of sound output by the electronic device, and improve call quality for the user.

S1704: When i=1, the electronic device detects a second preset operation performed on a volume down button.

The second preset operation may be an operation of pressing and holding a volume down button 302, or an operation of pressing a volume down button 302 a preset quantity of times within preset duration, or the like.

S1705: The electronic device decreases volume to second volume, where the second volume is lower than a volume value corresponding to the level i.

For example, volume corresponding to a level 1 is 5 dB, and the second volume is lower than 5 dB. In some embodiments, the second volume may be any volume value lower than 5 dB. Alternatively, the second volume may be obtained in a specific calculation manner. For example, the second volume is obtained according to the following formulas. The formulas satisfy:

$$Y2 = f(x_1) - P \tag{3}$$

$$P = \frac{f(x_{max}) - f(x_1)}{x_{max} - x_1} \tag{4}$$

Y2 indicates the second volume, x indicates a volume level, $x_{max}$ indicates a default highest level, for example, a level 5, and $f(x_{max})$ indicates a volume value corresponding to the highest level, that is, a vertical coordinate corresponding to the level 5 on a volume curve. $x_1$ indicates the level 1, and $f(x_1)$ indicates the volume value corresponding to the level 1, that is, a vertical coordinate corresponding to the level 1 on the volume curve.

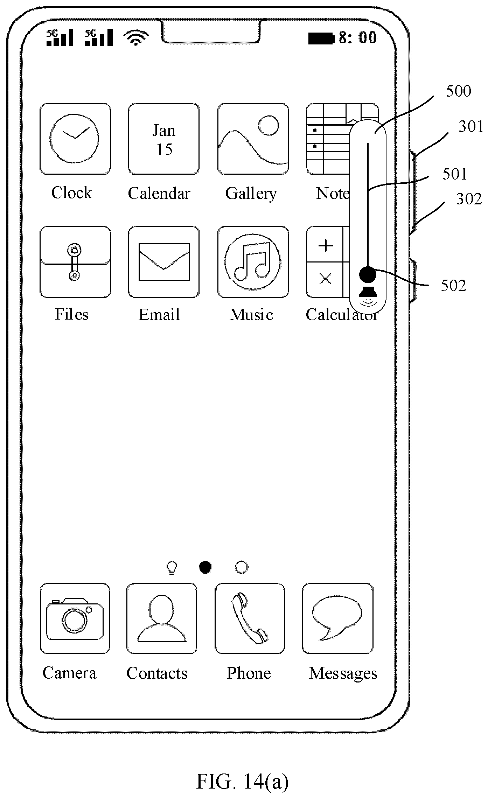

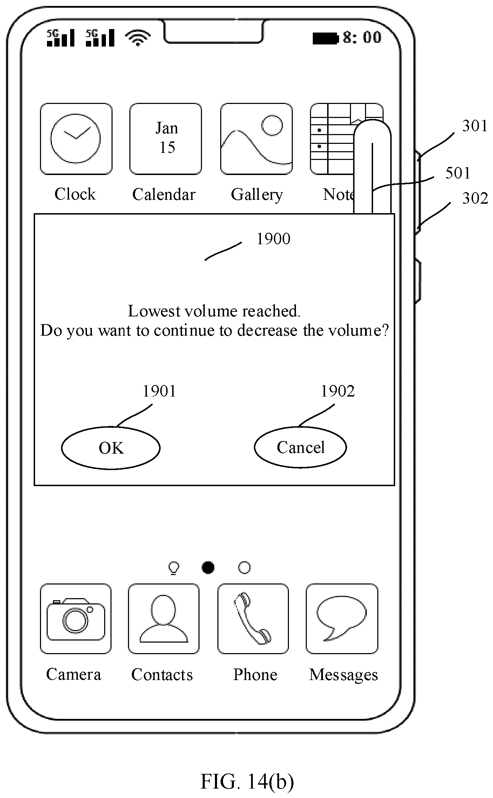

In some embodiments, before S1705, second prompt information may be further output. The second prompt information is used to prompt the user that the lowest level is reached currently and whether to continue to decrease the volume. If the electronic device receives a confirmation instruction, S1705 is performed. For example, as shown in FIG. 14(a), lowest volume of the electronic device is already reached, that is, a prompt point 502 is already located at a lowest point of a volume bar 501. In this case, if the electronic device detects the second preset operation performed on the volume down button 302, the electronic device displays an interface shown in FIG. 14(b). Prompt information 1900 is displayed in the interface. The prompt information 1900 is used to prompt that the lowest volume is already reached and whether to continue to decrease the volume. The electronic device further displays an OK button 1901 and a Cancel button 1902. When detecting an operation of triggering the OK button 1901 by the user, the electronic device decreases the volume to the second volume (that is, the volume obtained through calculation according to the foregoing formulas). Alternatively, when detecting an operation of triggering the OK button 1901 by the user, the electronic device displays the interface 604 shown in FIG. 7A(a) or FIG. 7A(b). The user may perform manual adjustment in the interface 604. When detecting an operation of triggering the Cancel button 1902 by the user, the electronic device does not decrease the volume.

In some embodiments, when the electronic device decreases the volume to the second volume, the electronic device may adjust the volume corresponding to the level 1 to the second volume, that is, adjust the vertical coordinate corresponding to the level 1 on the volume curve to a value of the second volume. Alternatively, when detecting that a quantity of historical times of decreasing the volume to the second volume when the volume is at the level 1 is greater than a second preset quantity of times, the electronic device adjusts the volume corresponding to the level 1 to the second volume.

S1706: When i is greater than 1 and less than N, the electronic device detects an operation of switching between the level i and a level i+1.

In some embodiments, the operation of switching between the level i and the level i+1 may include switching between the level i and the level i+1 only once or a plurality of times, for example, a quantity of switching times is greater than a threshold (for example, a first quantity of times). Switching once is used as an example, including: The level i of the electronic device is reached currently; at a first moment, the electronic device detects an operation performed on a volume up button 301, and adjusts the level i to the level i+1; and at a second moment, the electronic device detects an operation performed on a volume down button 302, and returns to the level i. A time difference between the first moment and the second moment is less than first preset duration. A possible scenario is as follows: The user feels that volume at the level i is excessively low, and when the level i is increased to the level i+1, the user feels that sound is excessively high, and returns to the level i.

S1707: The electronic device adjusts volume to third volume, where the third volume is between volume corresponding to the level i and volume corresponding to the level i+1, and the third volume may be understood as intermediate volume of the level i and the level i+1.

For example, the third volume is any volume value between the volume corresponding to the level i and the volume corresponding to the level i+1. For example, the third volume is an average value of the volume corresponding to the level i and the volume corresponding to the level i+1. That is, the third volume is obtained according to the following formula:

$$Y3 = \frac{f(x_i) + f(x_{i+1})}{2} \tag{5}$$

Y3 indicates the third volume, x indicates a volume level, $x_i$ indicates the level i, and $f(x_i)$ indicates the volume value corresponding to the level i. $x_{i+1}$ indicates the level i+1, and $f(x_{i+1})$ indicates the volume value corresponding to the level i+1.

In some embodiments, when the electronic device decreases the volume to the third volume, the electronic device may adjust the volume corresponding to the level i or the level i+1 to the third volume, that is, adjust a vertical coordinate corresponding to the level i or the level i+1 on a volume curve to a value of the third volume. Alternatively, when detecting that a quantity of historical times of adjusting the volume to the third volume when switching between the level i and the level i+1 is performed is greater than a third preset quantity of times, the electronic device adjusts the volume corresponding to the level i or the level i+1 to the second volume.

S1708: The electronic device updates a volume curve.

It should be understood that, after the electronic device updates the volume curve, an updated volume curve may be used for volume adjustment next time.

II. Automatic adjustment of a level range

For ease of understanding, an example in which a volume range remains unchanged and a level range is automatically adjusted is used.

In an implementation, the electronic device adjusts the level range based on quantities of times and/or frequencies of using different levels by a user. For example, the electronic device has five levels by default. If the electronic device determines, through statistics collection, that a quantity of times of using a level 5 within preset duration is less than a threshold, it is considered that volume of the level 5 does not adapt to the user. In this case, the level 5 may be canceled, and only first four levels are reserved. For another example, if the electronic device determines, through statistics collection, that a quantity of times of using a level 1 within preset duration is less than a threshold, the level 1 is canceled. For example, an original level 2 is used as a new level 1, an original level 3 is used as a new level 2, and so on.

It may be understood that the foregoing uses examples in which one of two parameters, namely, the volume level and the volume range, remains unchanged and the other parameter is automatically adjusted. In some other embodiments, the two parameters may be automatically adjusted together.

III. Automatic adjustment of volume adjustment precision

To be specific, S1706 and S1707 in FIG. 12 are used to adjust a volume difference between a level i and a level i+1.

Embodiment 1 and Embodiment 2 may be used separately or in combination.

For example, when Embodiment 1 and Embodiment 2 are combined, a user customizes a volume curve in a Settings application in a manner of Embodiment 1, and then the electronic device outputs sound based on the customized volume curve. Then, the electronic device may adjust the volume curve customized by the user in a manner of Embodiment 2.

In some other embodiments, the electronic device adjusts a volume curve when detecting that a first condition is satisfied. For example, the first condition includes at least one of the following cases.

    1. A current user of the electronic device is changed.

For example, when determining that the current user is a user 1, the electronic device adjusts the volume curve to a volume curve corresponding to the user 1. When determining that the current user is changed from the user 1 to a user 2, the electronic device adjusts the volume curve corresponding to the user 1 to a volume curve corresponding to the user 2.

In some embodiments, the volume curve corresponding to the user 1 may be a volume curve determined based on a habit or a feature of the user 1. Similarly, the volume curve corresponding to the user 2 may be a volume curve determined based on a habit or a feature of the user 2. For example, the user 1 has better hearing, and when the electronic device detects that the user 1 is using the electronic device, a volume curve corresponding to a person with better hearing may be used; or the user 2 has poorer hearing, and when the electronic device detects that the user 2 is using the electronic device, a volume curve corresponding to a person with poorer hearing may be used. In consideration of hearing, a volume upper limit of the volume curve corresponding to the person with poorer hearing may be higher than a volume upper limit of the volume curve corresponding to the person with better hearing. For example, the electronic device may determine habits or features of the user 1 and the user 2 based on images of the user 1 and the user 2 captured by a camera, and then determine, based on a correspondence between hearing and a volume curve, volume curves corresponding to hearing of the user 1 and the user 2. Features (for example, ages) of the user 1 and the user 2 are determined based on images.

In some other embodiments, the volume curve corresponding to the user 1 may be a volume curve historically set by the user 1 on the electronic device. The volume curve corresponding to the user 2 may be a volume curve historically set by the user 2 on the electronic device. A manner of setting the volume curve may be, for example, a manner of Embodiment 1 or Embodiment 2, and details are not described again. In other words, when determining that the current user is the user 1, the electronic device adjusts the volume curve to the volume curve that has been set by the user 1. When determining that the current user is changed from the user 1 to the user 2, the electronic device adjusts the volume curve to the volume curve that has been set by the user 2. In this way, when different users use the electronic device, a volume curve that matches a use habit of a current user may be used.

In some other embodiments, if the electronic device detects that the current user is changed from the user 1 to the user 2, and the electronic device does not store the volume curve corresponding to the user 2, the volume curve may be adjusted to the default volume curve.

2. A current environment in which the electronic device is located is changed.

For example, if the electronic device determines that the current environment is changed from a quiet environment to a noisy environment, a volume curve is changed from a volume curve used in the quiet environment to a volume curve corresponding to the noisy environment. For example, the electronic device stores a correspondence between ambient volume and a volume curve. When detecting that ambient sound in the current environment is changed, the electronic device determines, based on the correspondence, a volume curve corresponding to changed ambient sound. For example, correspondences between ambient sound and volume curves are shown in Table 2.

**Table 2: Correspondences between ambient sound and volume curves**

| Ambient sound | Volume curve |
| --- | --- |
| 0 dB to 50 dB | Volume curve 1 |
| 50 dB to 70 dB | Volume curve 2 |
| 70 dB to 100 dB | Volume curve 3 |

In some embodiments, the electronic device may detect ambient sound by using a microphone. For example, when the microphone detects that ambient sound in the current environment is between 0 dB and 50 dB, the volume curve 1 is used; or when the microphone detects that ambient sound is between 70 dB and 100 dB, the volume curve 3 is used.

3. The electronic device is connected to an external sound output device.

For example, when the electronic device is not connected to an external sound output device, a volume curve is used; and when it is detected that the electronic device is connected to an external sound output device (for example, a headset), another volume curve is used. In some other embodiments, different external sound output devices may correspond to different volume curves. For example, a headset corresponds to a volume curve, and a sound box corresponds to another volume curve. The volume curves corresponding to the different external sound output devices may be volume curves separately set when a user connects the electronic device to the different external sound output devices. For example, when the electronic device is connected to a headset, if the user adjusts a volume curve, an adjusted volume curve is a volume curve corresponding to the headset. For another example, when the electronic device is connected to a sound box, if the user adjusts a volume curve, an adjusted volume curve is a volume curve corresponding to the sound box.

In some embodiments, after the electronic device adjusts a volume curve, a volume prompt box 500 may be changed correspondingly.

For example, if a default level range is a level 1 to a level 5, a volume up button 301 needs to be pressed five times for a prompt point 502 in the volume prompt box 500 to move from a lowest point to a highest point. If an adjusted level range is a level 1 to a level 6, the volume up button 301 needs to be pressed six times for the prompt point 502 in the volume prompt box 500 to move from the lowest point to the highest point.

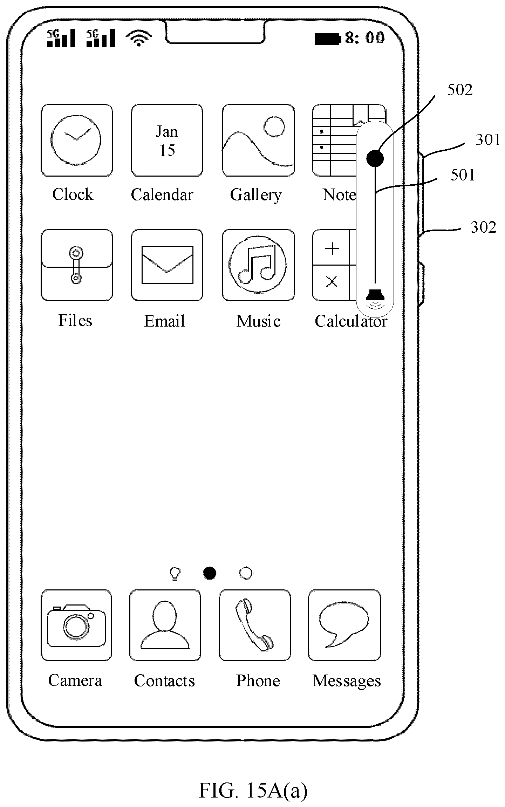

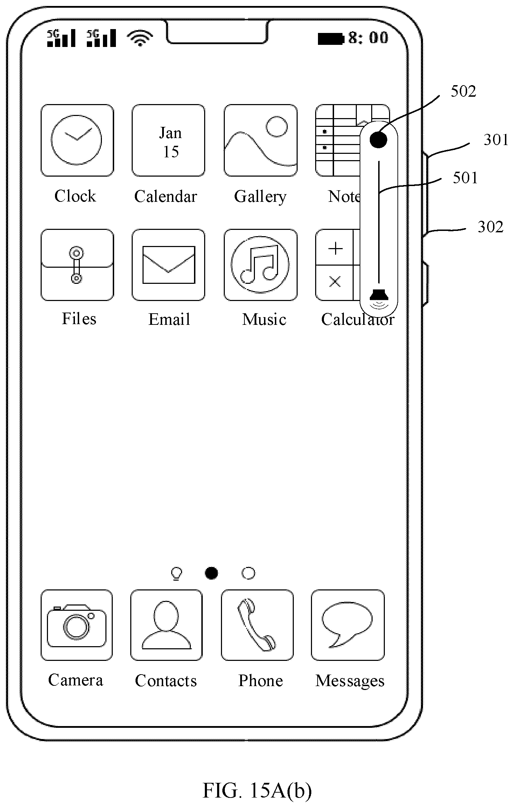

For another example, refer to FIG. 15A(a), the electronic device displays the volume prompt box 500. The prompt point 502 in the volume prompt box 500 is currently located at a highest point of a volume bar 501, indicating that a default highest level, for example, the level 5, is reached currently. In this case, if the electronic device detects an operation performed on the volume up button 301, the electronic device displays an interface shown in FIG. 15A(b). The prompt point 502 in the interface is displayed outside the volume bar 501, to prompt the user that a current volume level is higher than the default highest level. It should be noted that, in the foregoing solution in which the volume curve is fixed, when the prompt point 502 is reached the highest point of the volume bar 501, if the user triggers the volume up button 301 again, the electronic device does not respond. Because the volume curve is fixed, the volume level does not continue to increase when the highest level is reached. According to the volume adjustment solution provided in this application, the volume level may continue to increase when the default highest level is reached.

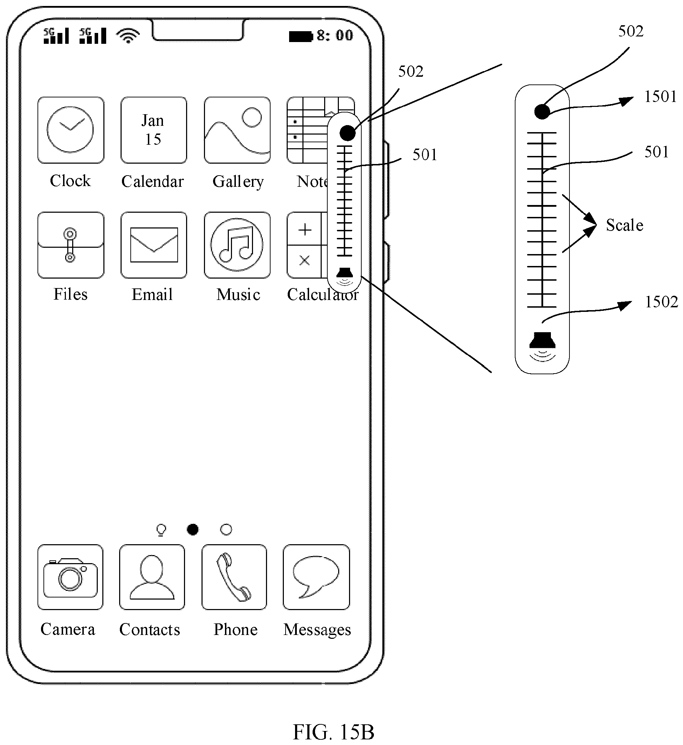

In some other embodiments, a scale may be displayed on the volume bar 501, and may indicate a volume level, as shown in FIG. 15B. After the electronic device adjusts a volume curve, the prompt point 502 may move to a location outside the scale. For example, there are the level 1 to the level 5 originally, and there are the level 1 to the level 6 after adjustment. In this case, the prompt point 502 may move to a location 1501, as shown in FIG. 15B, that is, the prompt point 502 moves out of the scale, indicating that volume corresponding to a current volume level is higher than volume of the default highest level. For another example, the user feels that volume corresponding to a lowest level is excessively high, and decreases the volume corresponding to the lowest level. In this case, the prompt point 502 may move to a location 1502, as shown in FIG. 15B, indicating that current volume is lower than the volume corresponding to the default lowest level.

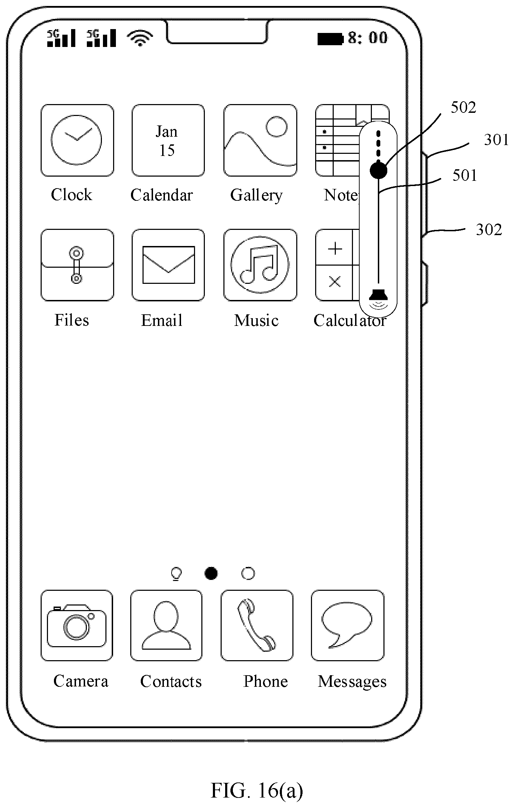

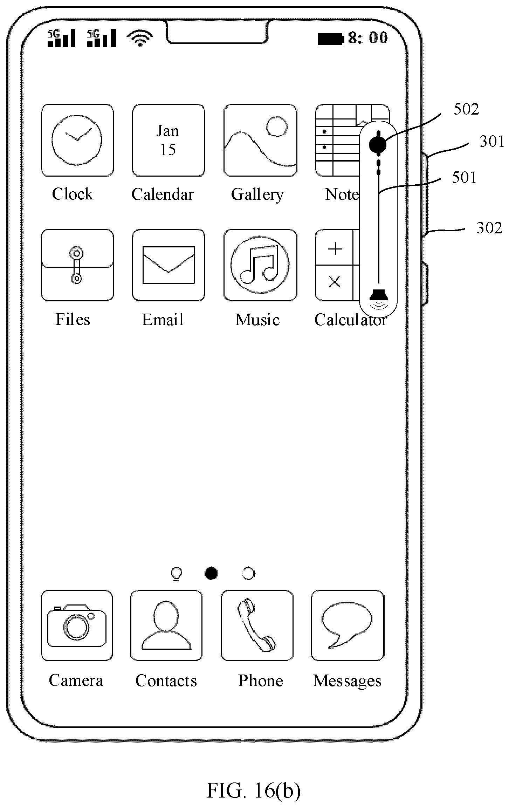

In FIG. 15A(a), FIG. 15A(b), and FIG. 15B, examples in which the prompt point 502 is detached from the volume bar 501 are used. In some other embodiments, the volume bar 501 may be extended, to indicate that the volume level is increased. For example, refer to FIG. 16(a). An extended part of the volume bar 501 is represented by a dashed line. An extended length is related to a quantity of increased levels. For example, a length extended when two levels are increased is greater than a length extended when one level is increased. As shown in FIG. 16(a), the prompt point 502 is located at a highest point of a non-extended part of the volume bar 501, indicating that a default highest level, for example, the level 5, is reached currently. In this case, if the electronic device detects an operation performed on the volume up button 301, the electronic device displays an interface shown in FIG. 16(b). The prompt point 502 in the interface is located on the extended part of the volume bar 501, to prompt the user that a current volume level is higher than the default highest level. In FIG. 16(a) and FIG. 16(b), an example in which the volume bar 501 is extended upward is used. It may be understood that the volume bar 501 may alternatively be extended downward. In conclusion, when a total quantity of levels of a volume curve after adjustment is greater than a total quantity of levels of a volume curve before adjustment, the volume bar 501 may be extended. Similarly, when a total quantity of levels of a volume curve after adjustment is less than a total quantity of levels of a volume curve before adjustment, the volume bar 501 may be shortened.

In the foregoing embodiments, examples in which the user controls volume up or down by using the volume up button 301 or the volume down button 302 are used. In some other embodiments, the user may further control volume by sliding the prompt point 502 on the volume bar 501.

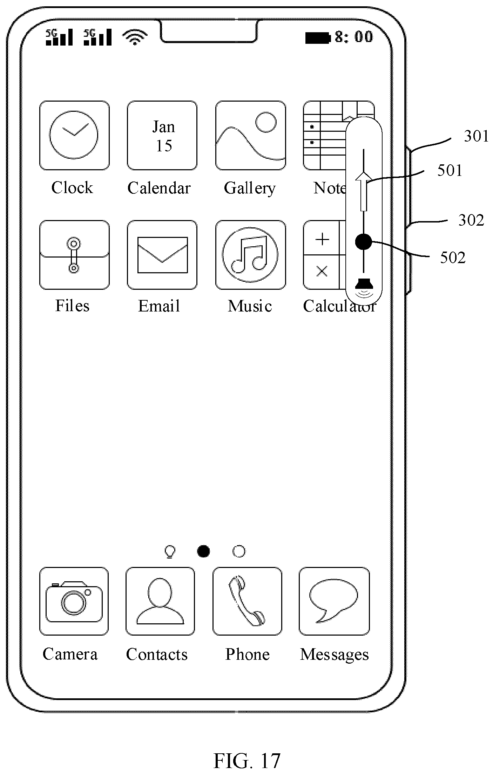

For example, refer to FIG. 17. When detecting an operation of dragging the prompt point 502 upward by the user, the electronic device increases volume. In this manner, there may be no need for the electronic device to perform volume adjustment level by level, and the electronic device determines, based on a location of the prompt point 502 moved by the user, a volume value corresponding to the location. For example, after determining a location of the prompt point 502 after movement, the electronic device maps the location to a horizontal coordinate value on a volume curve, and then determines a corresponding vertical coordinate value, that is, volume corresponding to the location of the prompt point 502.

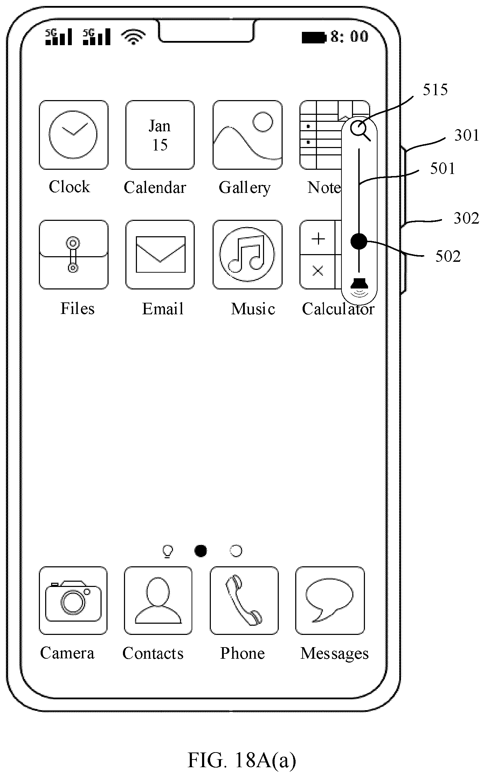

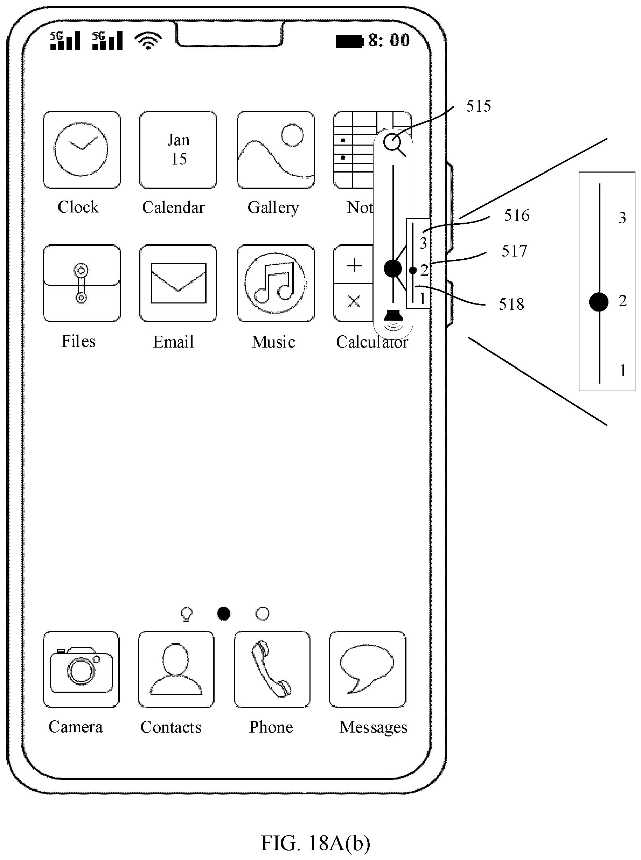

Generally, a display area of the volume prompt box 500 is small, a finger of the user cannot accurately drag the prompt point 502 to a corresponding location, and only rough volume adjustment can be implemented. In embodiments of this application, fine volume adjustment can be implemented by using a volume prompt box 500. For example, refer to FIG. 18A(a). The volume prompt box 500 includes a button 515. In the figure, an example in which the button 515 is a magnifier button is used, and the button 515 may alternatively be a button in another form. When detecting an operation performed on the button 515, the electronic device displays an interface shown in FIG. 18A(b). A volume fine-tuning box 516 is displayed in the interface. The volume fine-tuning box 516 is used to fine-tune volume. For example, the volume fine-tuning box 516 includes a prompt point 517 and a prompt bar 518. The user adjusts a location of the prompt point 517 on the prompt bar 518, to implement volume fine-tuning. For example, in FIG. 18A(b), a prompt point 502 is located at a level 2, and the user may adjust the volume to volume between the level 2 and a level 3 by using the fine-tuning box 516, to implement volume fine-tuning. In some embodiments, as shown in FIG. 18A(b), a level scale may be further displayed in the fine-tuning box 516, to facilitate adjustment by the user.

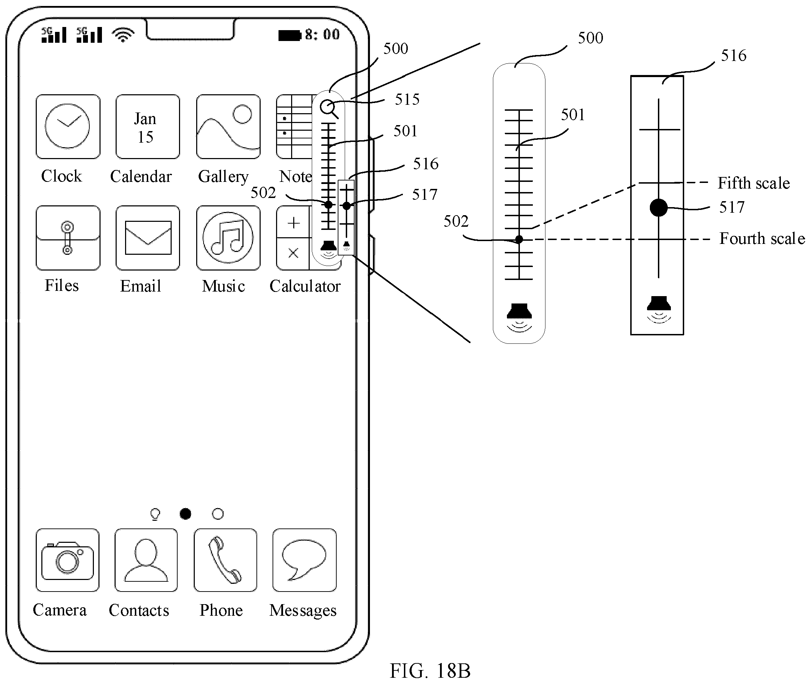

In some embodiments, a scale is displayed on a volume bar 501 in the prompt box 500, and may indicate a volume level. To implement fine volume adjustment, in the fine-tuning box 516, the user may place the prompt point between two scales. As shown in FIG. 18B, there are scales on the volume bar 501. Generally, the user may drag the prompt point 502 across one or more scales during dragging, and fine adjustment cannot be implemented. When detecting an operation performed on the button 515, the electronic device displays the fine-tuning box 516. In the fine-tuning box 516, the prompt point may be moved to a location between two scales. For example, as shown in FIG. 18B, the prompt point 502 is located on a fourth scale of the volume bar 501, and a distance between the fourth scale and a fifth scale in the fine-tuning box 516 is increased. The user may move the prompt point 517 to a location between the fourth scale and the fifth scale, to implement volume fine-tuning.

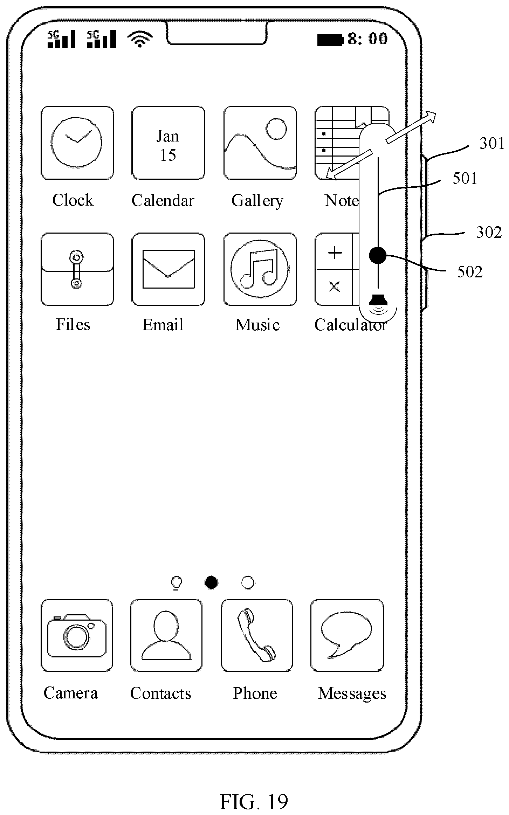

In FIG. 18A(a) and FIG. 18A(b) or FIG. 18B, an example in which the fine-tuning box 516 is opened by using the button 515 is used. In some other embodiments, the fine-tuning box 516 may be opened in another manner. For example, refer to FIG. 19. When detecting a zoom-in operation performed by the user on any location in the volume prompt box 500, the electronic device displays the fine-tuning box 516 shown in FIG. 18A(a) and FIG. 18A(b) or FIG. 18B. The zoom-in operation includes, for example, a first sliding operation and a second sliding operation, and sliding directions of the first sliding operation and the second sliding operation are opposite.

## Embodiment 3

In some embodiments, a current volume level needs to be set by a user, for example, set by using a volume up button 301 or a volume down button 302. Once the user adjusts a volume level to a specific level, an electronic device does not automatically change the volume level.

In some other embodiments, the electronic device may automatically adjust the current volume level. At least one of Manner A and Manner B is included.

Manner A: The electronic device adjusts a current volume level based on a habit of using a volume level by the user.

For example, the electronic device stores a quantity of times and/or a frequency of using each level by the user, and the electronic device may adjust the current volume level to a volume level with a quantity of use times greater than a threshold 1 and/or a use frequency greater than a threshold 2. For example, refer to Table 3.

**Table 3: Correspondences between levels and use habits**

| Level | Use frequency/Quantity of use times |
|---|---|
| Level 1 | 10 |
| ... | |
| Level 5 | 20 |

It may be understood that Table 3 may be obtained by the electronic device through real-time statistics collection. For example, when duration in which the electronic device is at the level 1 is greater than preset duration, the quantity of use times of the level 1 is increased by 1. Therefore, Table 3 may be updated. Certainly, Table 3 may alternatively be preconfigured in the electronic device. For example, Table 3 is configured before the electronic device is delivered from a factory.

Manner B: The electronic device adjusts a current volume level based on a habit of using a volume level by the user and current ambient noise.

For example, the electronic device stores quantities of times and/or frequencies of using each level by the user in different ambient noise. When the electronic device is currently in a first environment, the electronic device adjusts the current volume level to a volume level that the user is accustomed to using in the first environment. For example, refer to Table 4.

### Table 4: Correspondences among signal-to-noise ratios, levels, and use frequencies/quantities of use times

| Level \ Use frequency/Quantity of use times \ SNR | SNR 1 | ... | SNR n |
|---|---|---|---|
| Level 1 | 5 | | 10 |
| ... | | | |
| Level 5 | 1 | | 2 |

For example, when a signal-to-noise ratio of a current environment in which the electronic device is located is the SNR 1, the electronic device determines a level with a highest quantity of times and/or frequency of using by the user in a column of the SNR 1, and adjusts the current volume level to the volume level. A signal-to-noise ratio (Signal-to-Noise Ratio) is referred to as an SNR or S/N, and is a ratio of a sound signal to noise.

It may be understood that Table 4 may be obtained by the electronic device through real-time statistics collection. For example, when the electronic device determines, through statistics collection, that the user adjusts a volume level to the level 1 in an environment in which a signal-to-noise ratio is the SNR 1, and duration in which the electronic device is at the level 1 is greater than preset duration, the quantity of use times of the level 1 is increased by 1.

In some other embodiments, the use frequency and/or the use habit in Table 4 may be replaced with a use probability (or a probability for short). Therefore, Table 4 may be replaced with Table 5. An SNR 1 is used as an example. When a signal-to-noise ratio of a current environment is the SNR 1, a probability of a level 1 is a probability value obtained by dividing a quantity of use times of the level 1 by a total quantity of use times of all levels. Similarly, a probability of a level 2 is a probability value obtained by dividing a quantity of use times of the level 2 by the total quantity of use times of all levels, and so on. Therefore, when the signal-to-noise ratio of the current environment is the SNR 1, the electronic device determines a volume level with a highest use probability in the level 1 to the level 5, and recommends the volume level.

**Table 5: Correspondences among signal-to-noise ratios, levels, and use frequencies/quantities of use times**

| Level \ SNR Probability | SNR 1 | ... | SNR n |
|---|---|---|---|
| Level 1 | 0.6 | | 0.2 |
| ... | | | |
| Level 5 | 0.1 | | 0.5 |

Manner C: The electronic device adjusts a current volume level based on a habit of using a volume level by the user and a current time. For example, the electronic device stores quantities of times and/or frequencies of using each level by the user in different time periods. When the electronic device is currently in a specific time period, the electronic device adjusts the current volume level to a volume level that the user is accustomed to using in the time period. For example, refer to Table 6.

**Table 6: Correspondences among time periods, levels, and use frequencies/quantities of use times**

| Level \ Use frequency/Quantity of use times \ Time period | Time period 1 | ... | Time period n |
|---|---|---|---|
| Level 1 | 5 | | 10 |
| ... | | | |
| Level 5 | 1 | | 2 |

It may be understood that Table 6 may be obtained by the electronic device through real-time statistics collection. For example, when the electronic device determines, through statistics collection, that the user adjusts a volume level to the level 1 in different time periods, and duration in which the electronic device is at the level 1 is greater than preset duration, the quantity of use times of the level 1 is increased by 1. In some other embodiments, the use frequency and/or the use habit in Table 6 may be replaced with a use probability (or a probability for short). This is the same as a principle of Table 5.

It should be noted that, Manner A, Manner B, and Manner C may be used separately or in combination. This is not limited in embodiments of this application.

Embodiment 1 to Embodiment 3 may be used separately or in combination. The combination of Embodiment 1 and Embodiment 2 has been described above. The following uses a combination of Embodiment 1 and Embodiment 3 and a combination of Embodiment 2 and Embodiment 3 as examples for description.

The combination of Embodiment 1 and Embodiment 3 is as follows: An electronic device customizes a volume curve in a manner of Embodiment 1, and may adjust a current volume level based on the customized volume curve in a manner of Embodiment 3.

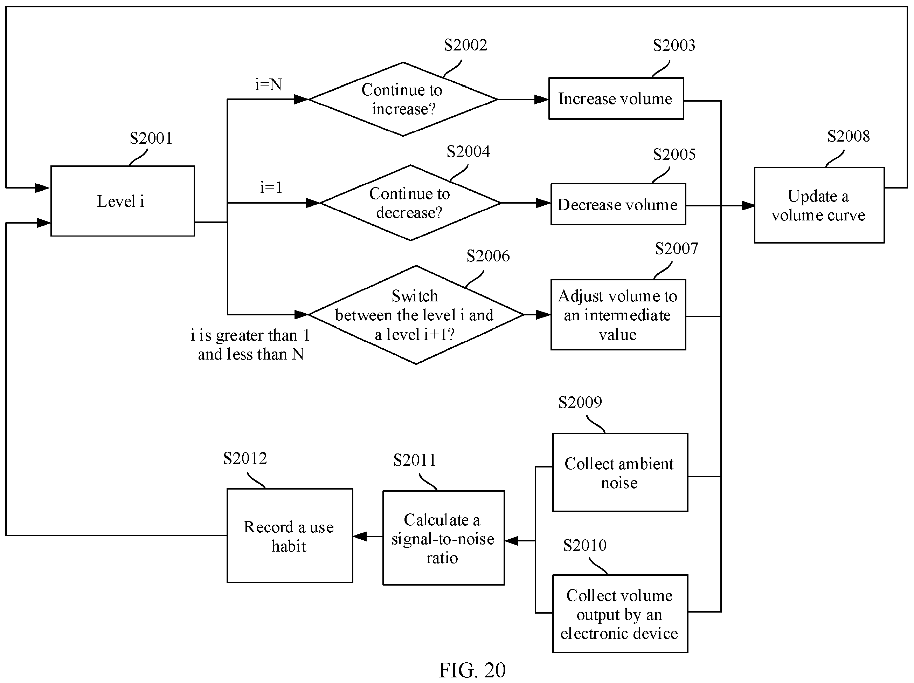

For the combination of Embodiment 2 and Embodiment 3, refer to FIG. 20. The process includes the following steps.

For S2001 to S2008, refer to the foregoing descriptions of S1701 to S1708 in FIG. 12. Details are not described again. The following descriptions start from S2009.

S2009: An electronic device collects ambient noise N.

S2010: The electronic device collects volume S of output sound.

S2011: The electronic device calculates a signal-to-noise ratio.

The signal-to-noise ratio is a ratio of the volume S of the sound output by the electronic device to the ambient noise N, that is, S/N.

S2012: The electronic device records a use habit.

After recording a volume level that a user is accustomed to using in this signal-to-noise ratio, the electronic device may adjust a current volume level based on the use habit.

It should be noted that, the volume adjustment method provided in embodiments of this application is applicable to various application scenarios. The following describes several application scenarios as examples.

Application scenario 1: Speaker

A speaker is a module for playing sound of an electronic device. A scenario in which the electronic device needs to use the speaker to output sound includes an incoming call ringtone, a hands-free call, multimedia sound play, an alarm clock, a new notification, and the like. Multimedia includes applications such as music, videos, and games.

Application scenario 2: Earpiece

A scenario in which an electronic device needs to use a receiver includes: answering a call, playing a voice message in an instant messaging application, and the like.

Application scenario 3: External sound output device

A headset is used as an example. The headset may be connected to an electronic device in a wired or wireless manner.

In some embodiments, one volume curve is applicable to all scenarios, or there are different volume curves for different scenarios. An electronic device may separately adjust volume curves corresponding to different scenarios.

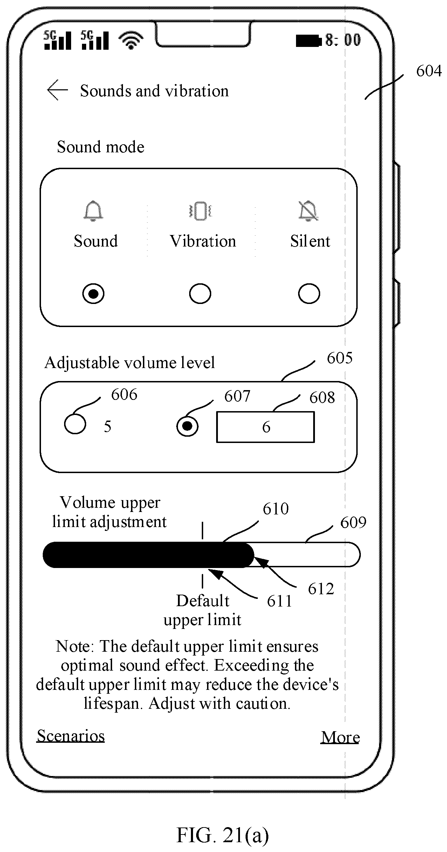

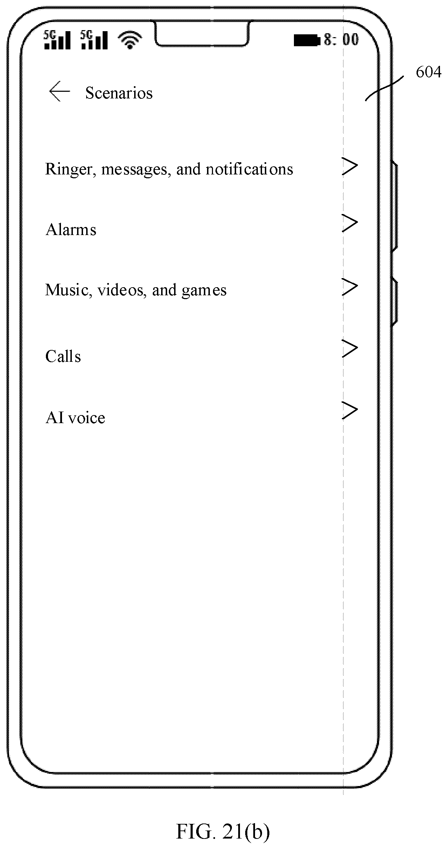

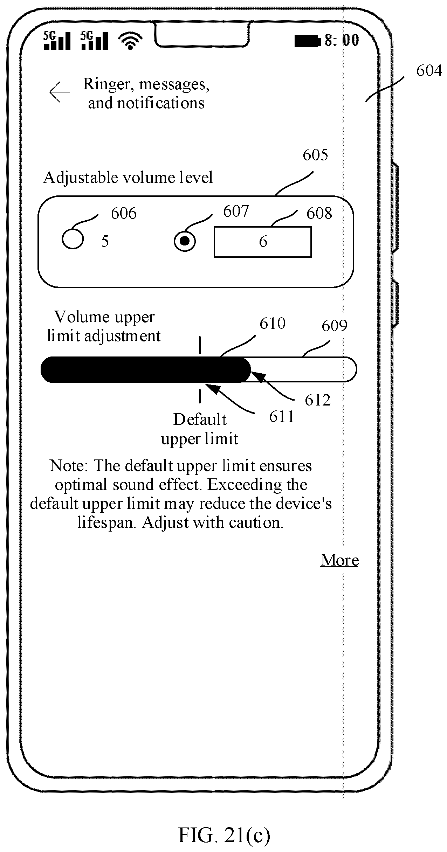

For example, as shown in FIG. 21(a), an electronic device displays an interface 604. The interface 604 includes a Scenarios button . When detecting an operation performed on the Scenarios button, the electronic device displays an interface shown in FIG. 21(b). The interface includes various scenario identities, for example, Ringer, messages, and notifications; Alarms; Music, videos, and games; Calls; AI voice; and Headset. When detecting an operation performed on a button, the electronic device displays an interface shown in FIG. 21(c). The interface is used to adjust a volume level range, a volume upper limit, volume adjustment precision, and the like in the scenario of Ringer, messages, and notifications.

Although this specification is described with reference to some embodiments, this does not mean that features of this application are limited only to the implementations. An objective of describing this application with reference to the implementations is to cover other options or modification that may be derived based on the claims of this specification. For a further understanding of this specification, the following descriptions include many specific details. This specification may also be implemented without using these details. In addition, to avoid confusion or obfuscation of a focus of this specification, some specific details are omitted in the descriptions. It should be noted that, embodiments of this specification or features in embodiments may be combined when no conflict occurs.

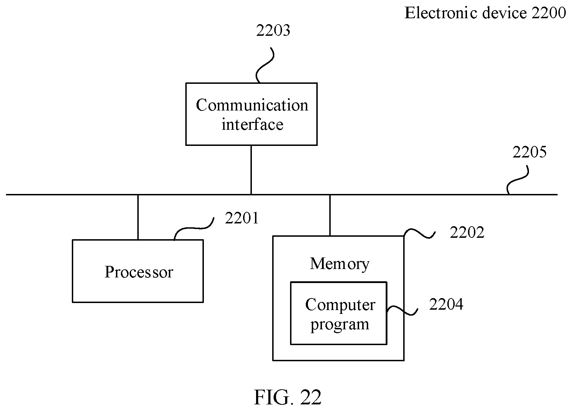

FIG. 22 shows an electronic device 2200 according to this application. The electronic device 2200 may be the foregoing mobile phone or another electronic device. As shown in FIG. 22, the electronic device 2200 may include one or more processors 2201, one or more memories 2202, a communication interface 2203, and one or more computer programs 2204. The foregoing components may be connected by using one or more communication buses 2205. The one or more computer programs 2204 are stored in the memory 2202 and are configured to be executed by the one or more processors 2201. The one or more computer programs 2204 include instructions, and the instructions may be used to perform the steps performed by the mobile phone in the corresponding embodiments. The communication interface 2203 is configured to implement communication with another device. For example, the communication interface may be a transceiver.

In embodiments provided in this application, the method provided in embodiments of this application is described from the perspective in which the electronic device (for example, the mobile phone) is used as an execution body. To implement the functions in the method provided in the foregoing embodiments of this application, the electronic device may include a hardware structure and/or a software module, and implement the functions in a form of hardware structure, software module, or combination of the hardware structure and the software module. Whether a function in the foregoing functions is performed by using the hardware structure, the software module, or both the hardware structure and the software module depends on specific application and design constraint conditions of the technical solutions.

According to the context, the term "when" or "after" used in the foregoing embodiments may be interpreted as a meaning of "if", "after", "in response to determining", or "in response to detecting". Similarly, according to the context, the phrase "when it is determined that" or "if (a stated condition or event) is detected" may be interpreted as a meaning of "if it is determined that", "in response to determining", "when (a stated condition or event) is detected", or "in response to detecting (a stated condition or event)". In addition, in the foregoing embodiments, relationship terms such as first and second are used to distinguish one entity from another entity, but do not limit any actual relationship and sequence between these entities.

Reference to "an embodiment", "some embodiments", or the like described in this specification indicates that one or more embodiments of this application include a specific feature, structure, or characteristic described with reference to the embodiments. Therefore, expressions such as "in an embodiment", "in some embodiments", "in some other embodiments", and "in other embodiments" that appear at different places in this specification do not necessarily mean reference to a same embodiment. Instead, the expressions mean "one or more but not all of embodiments", unless otherwise specifically emphasized in another manner. The terms "include", "comprise", "have", and their variants all mean "include but are not limited to", unless otherwise specifically emphasized in another manner.

All or some of the foregoing embodiments may be implemented by using software, hardware, firmware, or any combination thereof. When software is used to implement embodiments, all or some of embodiments may be implemented in a form of computer program product. The computer program product includes one or more computer instructions. When the computer program instructions are loaded and executed on a computer, all or some of the procedures or functions according to embodiments of the present invention are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, like a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (SSD)), or the like. When no conflict occurs, the solutions in the foregoing embodiments may be combined for use.

**Claims**

1. A volume adjustment method, applied to an electronic device, wherein

   the electronic device comprises N sound volume levels, N is a positive integer, the N sound volume levels comprise a first sound level and a second sound level, the first sound level corresponds to a first sound volume value, the second sound level corresponds to a second sound volume value, and a difference between the first sound volume value and the second sound volume value is a first difference; and the method comprises:
   adjusting, by the electronic device based on a user operation to adjust a volume upper limit, the N sound volume levels to M sound volume levels when a first condition is satisfied, wherein M is a positive integer, the M sound volume levels comprise a third sound level and a fourth sound level wherein the third sound level and the first sound level are a same sound level, the fourth sound level and the second sound level are a same sound level, the third sound level corresponds to a third sound volume value, the fourth sound level corresponds to a fourth sound volume value, and a difference between the third sound volume value and the fourth sound volume value is a second difference, wherein
   the M sound volume levels satisfy the following:

   the third sound volume value is not equal to the first sound volume value;
   wherein the first sound level and the third sound level are a highest sound level, the second sound level and the fourth sound level are a lowest sound level, and the second difference is greater than the first difference; and
   wherein the third sound volume value is higher than the first sound volume value.

2. The method according to claim 1, wherein that a first condition is satisfied comprises:
   when the first sound level is reached currently, an operation indicating to continue to increase volume is received.

3. The method according to claim 2, wherein
   the operation of continuing to increase the volume comprises: an operation of pressing and holding a volume up button (301), or an operation of pressing a volume up button (301) more than a second preset quantity of times within second preset duration.

**4.** The method according to claim 1, wherein that a first condition is satisfied is determined by the electronic device and comprises at least one of the following:

it is detected that a current user of the electronic device is changed;
it is detected that a current environment in which the electronic device is located is changed;
it is detected that the electronic device is connected to an external sound output device; or
it is detected that a user performs a volume adjustment operation in a first interface.

**5.** The method according to claim 4, wherein

when the first condition comprises that a current user of the electronic device is changed, the adjusting the N sound volume levels to M sound volume levels comprises: adjusting the N sound volume levels to M sound volume levels corresponding to the current user;
when the first condition comprises that a current environment in which the electronic device is located is changed, the adjusting the N sound volume levels to M sound volume levels comprises: adjusting the N sound volume levels to M sound volume levels corresponding to the current environment; or
when the first condition comprises that the electronic device is connected to an external sound output device, the adjusting the N sound volume levels to M sound volume levels comprises: adjusting the N sound volume levels to M sound volume levels corresponding to the external sound output device.

**6.** The method according to any one of claims 1 to 5, wherein
a current volume level of the electronic device is adjusted according to a change of at least one of the following: environment, time, user of the electronic device, foreground application, or connected sound output device.

**7.** The method according to any one of claims 1 to 6, further comprising:

adjusting, by the electronic device, the current sound volume level to a fifth sound level when the electronic device detects that a first environment is entered, wherein the fifth sound level is a sound volume level that is determined based on a first historical record and that has a highest probability of using by a user in the first environment, wherein
the first historical record comprises historical probabilities of using each level by the user in different environments.

**8.** The method according to any one of claims 1 to 6, further comprising:

adjusting, by the electronic device, the current sound volume level to a sixth sound level when the electronic device determines that a current time is in a first time period, wherein the sixth sound level is a sound volume level that is determined based on a second historical record and that has a highest probability of using by a user in the first time period, wherein
the second historical record comprises historical probabilities of using each level by the user in different time periods.

**9.** The method according to any one of claims 1 to 8, wherein

before the adjusting, by the electronic device, the N sound volume levels to M sound volume levels, the method further comprises: displaying a first progress bar in response to a first operation, to describe current volume by using progress indicated by the first progress bar;
after the adjusting, by the electronic device, the N sound volume levels to M sound volume levels, the method further comprises: displaying a second progress bar in response to a second operation, to describe current volume by using progress indicated by the second progress bar; and
the first progress bar is different from the second progress bar.

**10.** The method according to claim 9, wherein that the first progress bar is different from the second progress bar comprises at least one of the following:

a total length of the first progress bar is different from a total length of the second progress bar;
a movement step of the first progress bar is different from a movement step of the second progress bar, and the movement step indicates a movement length required when one level is adjusted; or

a quantity of movement times of the first progress bar is different from a quantity of movement times of the second progress bar, and the quantity of movement times indicates a quantity of movement times required when the lowest level is adjusted to the highest level.

**11.** The method according to claim 10, wherein

the total length and the quantity of movement times of the first progress bar are related to N, and the movement step of the first progress bar is related to a volume difference between two adjacent levels in the N sound volume levels; and

the total length and the quantity of movement times of the second progress bar are related to M, and the movement step of the second progress bar is related to a volume difference between two adjacent levels in the M sound volume levels.

**12.** The method according to any one of claims 1 to 11, further comprising:

displaying a first prompt bar, wherein progress indicated by the first prompt bar is used to describe current volume; and

displaying a second prompt bar in response to a third operation, wherein when progress on the second prompt bar is changed by a first length, the progress on the first prompt bar is changed by a second length, a volume change amount corresponding to the first length is the same as a volume change amount corresponding to the second length, and the first length is greater than the second length.

**13.** An electronic device, comprising:

a processor (110), a memory (121), one or more programs, and an audio module (170), wherein the electronic device is configured to have a sound volume adjustment function for adjusting the sound volume of sound output by the electronic device;

the one or more programs are stored in the memory, the one or more programs comprise instructions, and when the instructions are executed by the processor, the electronic device is enabled to perform the method according to any one of claims 1 to 12.

**Patentansprüche**

**1.** Volumenanpassungsverfahren, das auf eine elektronische Vorrichtung angewendet wird, wobei die elektronische Vorrichtung N Schalllautstärkepegel umfasst, N eine positive ganze Zahl ist, die N Schalllautstärkepegel einen ersten Schallpegel und einen zweiten Schallpegel umfassen, der erste Schallpegel einem ersten Schalllautstärkewert entspricht, der zweite Schallpegel einem zweiten Schalllautstärkewert entspricht und eine Differenz zwischen dem ersten Schalllautstärkewert und dem zweiten Schalllautstärkewert eine erste Differenz ist; und das Verfahren Folgendes umfasst:

Anpassen der N Schalllautstärkepegel an M Schalllautstärkepegel durch die elektronische Vorrichtung basierend auf einem Vorgang des Benutzers, um eine Lautstärkeobergrenze anzupassen, wenn eine erste Bedingung erfüllt ist, wobei M eine positive ganze Zahl ist, wobei die M Schalllautstärkepegel einen dritten Schallpegel und einen vierten Schallpegel umfassen, wobei der dritte Schallpegel und der erste Schallpegel ein gleicher Schallpegel sind, der vierte Schallpegel und der zweite Schallpegel ein gleicher Schallpegel sind, der dritte Schallpegel einem dritten Schalllautstärkewert entspricht, der vierte Schallpegel einem vierten Schalllautstärkewert entspricht und eine Differenz zwischen dem dritten Schalllautstärkewert und dem vierten Schalllautstärkewert eine zweite Differenz ist, wobei die M Schalllautstärkepegel Folgendes erfüllen:

der dritte Schalllautstärkewert nicht gleich dem ersten Schalllautstärkewert ist; wobei der erste Schallpegel und der dritte Schallpegel ein höchster Schallpegel sind, der zweite Schallpegel und der vierte Schallpegel ein niedrigster Schallpegel sind und die zweite Differenz größer als die erste Differenz ist; und wobei der dritte Schallleistungswert höher als der erste Schallleistungswert ist.

**2.** Verfahren nach Anspruch 1, **dadurch gekennzeichnet, dass** das Erfüllen einer ersten Bedingung Folgendes umfasst:
wenn der erste Schallpegel aktuell erreicht ist, wird ein Vorgang empfangen, der angibt, dass die Lautstärke weiter erhöht werden soll.

3.  Verfahren nach Anspruch 2, wobei
der Vorgang des weiteren Erhöhens der Lautstärke Folgendes umfasst: einen Vorgang des Drückens und Haltens einer Taste zum Erhöhen der Lautstärke (301) oder einen Vorgang des Drückens einer Taste zum Erhöhen der Lautstärke (301) mehr als eine zweite voreingestellte Anzahl von Malen innerhalb einer zweiten voreingestellten Dauer.

4.  Verfahren nach Anspruch 1, wobei das Erfüllen einer ersten Bedingung durch das elektronische Gerät festgestellt wird und mindestens eines von Folgenden umfasst:

> es wird detektiert, dass ein aktueller Benutzer der elektronischen Vorrichtung geändert wird;
> es wird detektiert, dass eine aktuelle Umgebung, in der sich die elektronische Vorrichtung befindet, geändert wird;
> es wird detektiert, dass die elektronische Vorrichtung mit einer externen Schallausgabevorrichtung verbunden ist; oder
> es wird detektiert, dass ein Benutzer einen Volumenanpassungsvorgang in einer ersten Oberfläche durchführt.

5.  Verfahren nach Anspruch 4, wobei

> wenn die erste Bedingung umfasst, dass ein aktueller Benutzer der elektronischen Vorrichtung geändert wird, das Anpassen der N Schalllautstärkepegel an M Schalllautstärkepegel Folgendes umfasst: Anpassen der N Schalllautstärkepegel an M Schalllautstärkepegel entsprechend dem aktuellen Benutzer;
> wenn die erste Bedingung umfasst, dass eine aktuelle Umgebung, in der sich die elektronische Vorrichtung befindet, geändert wird, das Anpassen der N Schalllautstärkepegel an M Schalllautstärkepegel Folgendes umfasst: Anpassen der N Schalllautstärkepegel an M Schalllautstärkepegel entsprechend der aktuellen Umgebung; oder
> wenn die erste Bedingung umfasst, dass die elektronische Vorrichtung mit einer externen Schallausgabevorrichtung verbunden ist, das Anpassen der N Schalllautstärkepegel an M Schalllautstärkepegel Folgendes umfasst: Anpassen der N Schalllautstärkepegel an M Schalllautstärkepegel entsprechend der externen Schallausgabevorrichtung.

6.  Verfahren nach einem der Ansprüche 1 bis 5, wobei ein aktueller Lautstärkepegel der elektronischen Vorrichtung nach einer Änderung mindestens eines von Folgendem angepasst wird: Umgebung, Zeit, Benutzer der elektronischen Vorrichtung, Vordergrundanwendung oder verbundene Schallausgabevorrichtung.

7.  Verfahren nach einem der Ansprüche 1 bis 6, ferner umfassend:

> Anpassen des aktuellen Schalllautstärkepegels an einen fünften Schallpegel durch die elektronische Vorrichtung, wenn die elektronische Vorrichtung detektiert, dass eine erste Umgebung betreten wird, wobei der fünfte Schallpegel ein Schalllautstärkepegel ist, der basierend auf einer ersten historischen Aufzeichnung bestimmt wird und der eine höchste Wahrscheinlichkeit der Verwendung durch einen Benutzer in der ersten Umgebung aufweist, wobei
> die erste historische Aufzeichnung historische Wahrscheinlichkeiten der Verwendung jeder Ebene durch einen Benutzer in unterschiedlichen Umgebungen umfasst.

8.  Verfahren nach einem der Ansprüche 1 bis 6, ferner umfassend:

> Anpassen des aktuellen Schalllautstärkepegels an einen sechsten Schallpegel durch die elektronische Vorrichtung, wenn die elektronische Vorrichtung bestimmt, dass ein aktueller Zeitpunkt in einer ersten Zeitspanne liegt, wobei der sechste Schallpegel ein Schalllautstärkepegel ist, der basierend auf einer zweiten historischen Aufzeichnung bestimmt wird und der eine höchste Wahrscheinlichkeit der Verwendung durch einen Benutzer in der ersten Zeitspanne aufweist, wobei
> die zweite historische Aufzeichnung historische Wahrscheinlichkeiten der Verwendung jeder Ebene durch einen Benutzer in unterschiedlichen Zeiträumen umfasst.

9.  Verfahren nach einem der Ansprüche 1 bis 8, wobei vor dem Anpassen der N Schalllautstärkepegel an M Schalllautstärkepegel durch die elektronische Vorrichtung, das Verfahren ferner Folgendes umfasst: Anzeigen eines ersten Fortschrittsbalkens als Reaktion auf einen ersten Vorgang, um die aktuelle Lautstärke unter Verwendung des vom ersten Fortschrittsbalken angegebenen Fortschritts zu beschreiben; nach dem Anpassen der N Schalllautstärkepegel an M Schalllautstärkepegel durch die elektronische Vorrichtung, das Verfahren ferner Folgendes umfasst: Anzeigen eines zweiten Fortschrittsbalkens als Reaktion auf einen zweiten Vorgang, um die aktuelle Lautstärke unter Verwendung des vom zweiten Fortschrittsbalken angegebenen Fortschritts zu beschreiben; und sich der erste Fortschrittsbalken von dem zweiten Fortschrittsbalken unterscheidet.

10. Verfahren nach Anspruch 9, wobei die Tatsache, dass sich der erste Fortschrittsbalken von dem zweiten Fortschrittsbalken unterscheidet, mindestens eines von Folgendem umfasst:

eine Gesamtlänge des ersten Fortschrittsbalkens unterscheidet sich von einer Gesamtlänge des zweiten Fortschrittsbalkens;
ein Bewegungsschritt des ersten Fortschrittsbalkens unterscheidet sich von einem Bewegungsschritt des zweiten Fortschrittsbalkens, und der Bewegungsschritt gibt eine Bewegungslänge an, die erforderlich ist, wenn ein Pegel angepasst wird; oder
eine Anzahl von Bewegungszeiten des ersten Fortschrittsbalkens unterscheidet sich von einer Anzahl von Bewegungszeiten des zweiten Fortschrittsbalkens, und die Anzahl von Bewegungszeiten gibt eine Anzahl von Bewegungszeiten an, die erforderlich ist, wenn der niedrigste Pegel an den höchsten Pegel angepasst wird.

11. Verfahren nach Anspruch 10, wobei

die Gesamtlänge und die Anzahl der Bewegungszeiten des ersten Fortschrittsbalkens mit N in Beziehung stehen und der Bewegungsschritt des ersten Fortschrittsbalkens mit einem Lautstärkeunterschied zwischen zwei benachbarten Pegeln in den N Schalllautstärkepegeln in Beziehung steht; und
die Gesamtlänge und die Anzahl der Bewegungszeiten des zweiten Fortschrittsbalkens mit M in Beziehung stehen und der Bewegungsschritt des zweiten Fortschrittsbalkens mit einem Lautstärkeunterschied zwischen zwei benachbarten Pegeln in den M Schalllautstärkepegeln in Beziehung steht.

12. Verfahren nach einem der Ansprüche 1 bis 11, ferner umfassend:

Anzeigen eines ersten Eingabeaufforderungsbalkens, wobei der durch den ersten Eingabeaufforderungsbalken angegebene Fortschritt zur Beschreibung der aktuellen Lautstärke verwendet wird; und
Anzeigen eines zweiten Eingabeaufforderungsbalkens als Reaktion auf einen dritten Vorgang, wobei, wenn der Fortschritt auf dem zweiten Eingabeaufforderungsbalken um eine erste Länge geändert wird, der Fortschritt auf dem ersten Eingabeaufforderungsbalken um eine zweite Länge geändert wird, ein Volumenänderungsbetrag, der der ersten Länge entspricht, der gleiche ist wie ein Volumenänderungsbetrag, der der zweiten Länge entspricht, und
die erste Länge größer ist als die zweite Länge.

13. Elektronische Vorrichtung, umfassend:

einen Prozessor (110), einen Speicher (121), ein oder mehrere Programme und ein Audiomodul (170), wobei die elektronische Vorrichtung dazu konfiguriert ist, eine Funktion zur Anpassung der Lautstärke aufzuweisen, um die Lautstärke des von der elektronischen Vorrichtung ausgegebenen Schalls anzupassen;
das eine oder die mehreren Programme in dem Speicher gespeichert sind, das eine oder die mehreren Programme Anweisungen umfassen, und wenn die Anweisungen durch den Prozessor ausgeführt werden, die elektronische Vorrichtung in die Lage versetzt wird, das Verfahren nach einem der Ansprüche 1 bis 12 durchzuführen.

**Revendications**

1. Procédé de réglage du volume, appliqué à un dispositif électronique, dans lequel le dispositif électronique comprend N niveaux de volume sonore, N est un entier positif, les N niveaux de volume sonore comprennent un premier niveau sonore et un deuxième niveau sonore, le premier niveau sonore correspond à une première valeur de volume sonore, le deuxième niveau sonore correspond à une deuxième valeur de volume sonore, et une différence entre la première valeur de volume sonore et la deuxième valeur de volume sonore est une première différence ; et le procédé comprend :

le réglage, par le dispositif électronique sur la base d'une opération utilisateur pour régler une limite supérieure de volume, des N niveaux de volume sonore à M niveaux de volume sonore lorsqu'une première condition est satisfaite, dans lequel M est un entier positif, les M niveaux de volume sonore comprennent un troisième niveau sonore et un quatrième niveau sonore, dans lequel le troisième niveau sonore et le premier niveau sonore sont un même niveau sonore, le quatrième niveau sonore et le deuxième niveau sonore sont un même niveau sonore, le troisième niveau sonore correspond à une troisième valeur de volume sonore, le quatrième niveau sonore correspond à une quatrième valeur de volume sonore, et une différence entre la troisième valeur de volume sonore et la quatrième valeur de volume sonore est une seconde différence, dans lequel les M niveaux de volume sonore satisfont aux exigences suivantes :

la troisième valeur de volume sonore n'est pas égale à la première valeur de volume sonore ;
dans lequel le premier niveau sonore et le troisième niveau sonore sont un niveau sonore le plus élevé, le deuxième niveau sonore et le quatrième niveau sonore sont un niveau sonore le plus bas, et la seconde différence est supérieure à la première différence ; et
dans lequel la troisième valeur de volume sonore est supérieure à la première valeur de volume sonore.

2. Procédé selon la revendication 1, dans lequel le fait que la première condition est satisfaite comprend :
lorsque le premier niveau sonore est actuellement atteint, une opération indiquant de continuer à augmenter le volume est reçue.

3. Procédé selon la revendication 2, dans lequel
l'opération de poursuite de l'augmentation du volume comprend : une opération consistant à appuyer et à maintenir un bouton d'augmentation du volume (301), ou une opération consistant à appuyer sur un bouton d'augmentation du volume (301) plus d'une seconde quantité prédéfinie de fois au cours d'une seconde durée prédéfinie.

4. Procédé selon la revendication 1, dans lequel le fait qu'une première condition est satisfaite est déterminée par le dispositif électronique et comprend au moins l'un des éléments suivants :

il est détecté qu'un utilisateur actuel du dispositif électronique a changé ;
il est détecté qu'un environnement actuel dans lequel se trouve le dispositif électronique a changé ;
il est détecté que le dispositif électronique est connecté à un dispositif de sortie sonore externe ; ou
il est détecté qu'un utilisateur réalise une opération de réglage du volume dans une première interface.

5. Procédé selon la revendication 4, dans lequel lorsque la première condition comprend qu'un utilisateur actuel du dispositif électronique a changé, le réglage des N niveaux de volume sonore à M niveaux de volume sonore comprend :

le réglage des N niveaux de volume sonore à M niveaux de volume sonore correspondant à l'utilisateur actuel ;
lorsque la première condition comprend qu'un environnement actuel dans lequel se trouve le dispositif électronique a changé, le réglage des N niveaux de volume sonore à M niveaux de volume sonore comprend : le réglage des N niveaux de volume sonore à M niveaux de volume sonore correspondant à l'environnement actuel ; ou
lorsque la première condition comprend que le dispositif électronique est connecté à un dispositif de sortie sonore externe, le réglage des N niveaux de volume sonore à M niveaux de volume sonore comprend : le réglage des N niveaux de volume sonore à M niveaux de volume sonore correspondant au dispositif de sortie sonore externe.

6. Procédé selon l'une quelconque des revendications 1 à 5, dans lequel
un niveau de volume actuel du dispositif électronique est réglé selon un changement d'au moins l'un des éléments suivants : environnement, heure, utilisateur du dispositif électronique, application de premier plan ou dispositif de sortie sonore connecté.

7. Procédé selon l'une quelconque des revendications 1 à 6, comprenant également :

le réglage, par le dispositif électronique, du niveau de volume sonore actuel à un cinquième niveau sonore lorsque le dispositif électronique détecte qu'un premier environnement est entré, dans lequel le cinquième niveau sonore est un niveau de volume sonore qui est déterminé sur la base d'un premier enregistrement historique et qui a la plus grande probabilité d'être utilisé par un utilisateur dans le premier environnement, dans lequel le premier enregistrement historique comprend des probabilités historiques d'utilisation de chaque niveau par l'utilisateur dans différents environnements.

8. Procédé selon l'une quelconque des revendications 1 à 6, comprenant également :

le réglage, par le dispositif électronique, du niveau de volume sonore actuel à un sixième niveau sonore lorsque le dispositif électronique détermine qu'une heure actuelle se trouve dans une première période, dans lequel le sixième niveau sonore est un niveau de volume sonore déterminé sur la base d'un second enregistrement historique et présente la plus forte probabilité d'être utilisé par un utilisateur au cours de la première période, dans lequel
le second enregistrement historique comprend des probabilités historiques d'utilisation de chaque niveau par l'utilisateur à différentes périodes.

9. Procédé selon l'une quelconque des revendications 1 à 8, dans lequel

avant le réglage, par le dispositif électronique, des N niveaux de volume sonore à M niveaux de volume sonore, le procédé comprend également : l'affichage d'une première barre de progression en réponse à une première opération, pour décrire le volume actuel en utilisant la progression indiquée par la première barre de progression ; après le réglage, par le dispositif électronique, des N niveaux de volume sonore à M niveaux de volume sonore, le procédé comprend également : l'affichage d'une seconde barre de progression en réponse à une deuxième opération, pour décrire le volume actuel en utilisant la progression indiquée par la seconde barre de progression ; et
la première barre de progression est différente de la seconde barre de progression.

10. Procédé selon la revendication 9, dans lequel le fait que la première barre de progression est différente de la seconde barre de progression comprend au moins l'un des éléments suivants :

une longueur totale de la première barre de progression est différente d'une longueur totale de la seconde barre de progression ;
une étape de mouvement de la première barre de progression est différente d'une étape de mouvement de la seconde barre de progression, et l'étape de mouvement indique une longueur de mouvement requise lorsqu'un niveau est réglé ; ou
une quantité de temps de mouvement de la première barre de progression est différente d'une quantité de temps de mouvement de la seconde barre de progression, et la quantité de temps de mouvement indique une quantité de temps de mouvement requise lorsque le niveau le plus bas est réglé au niveau le plus élevé.

11. Procédé selon la revendication 10, dans lequel la longueur totale et la quantité de temps de mouvement de la première barre de progression sont liées à N, et l'étape de mouvement de la première barre de progression est liée à une différence de volume entre deux niveaux adjacents dans les N niveaux de volume sonore ; et
la longueur totale et la quantité de temps de mouvement de la seconde barre de progression sont liées à M, et l'étape de mouvement de la seconde barre de progression est liée à une différence de volume entre deux niveaux adjacents dans les M niveaux de volume sonore.

12. Procédé selon l'une quelconque des revendications 1 à 11, comprenant également :

l'affichage d'une première barre d'invite, dans lequel la progression indiquée par la première barre d'invite est utilisée pour décrire le volume actuel ; et
l'affichage d'une seconde barre d'invite en réponse à une troisième opération, dans lequel lorsque la progression sur la seconde barre d'invite est modifiée d'une première longueur, la progression sur la première barre d'invite est modifiée d'une seconde longueur, une quantité de changement de volume correspondant à la première longueur est la même qu'une quantité de changement de volume correspondant à la seconde longueur, et la première longueur est supérieure à la seconde longueur.

13. Dispositif électronique, comprenant :

un processeur (110), une mémoire (121), un ou plusieurs programmes et un module audio (170), dans lequel le dispositif électronique est configuré pour avoir une fonction de réglage du volume sonore pour régler le volume sonore de la sortie sonore par le dispositif électronique ;
les un ou plusieurs programmes sont stockés dans la mémoire,

les un ou plusieurs programmes comprennent des instructions,
et lorsque les instructions sont exécutées par le processeur,
le dispositif électronique est activé pour réaliser le procédé selon l'une quelconque des revendications 1 à 12.

Electronic device 100

FIG. 1

| Application layer | Camera | Settings | Skin module | User interface | Gallery |
|---|---|---|---|---|---|
| | Map | WLAN | Music | Messages | Calendar |
| | Phone | Navigation | Bluetooth | Videos | ... |

| Application framework layer | Window manager | Content provider | Phone manager | Resource manager |
|---|---|---|---|---|
| | Notification manager | View system | ... | |

| System library | Surface manager | Three-dimensional graphics processing library | Android running |
|---|---|---|---|
| | Two-dimensional graphics engine | Media library | Sound processing module | ... |

| Kernel layer | Display driver | Camera driver | |
|---|---|---|---|
| | Audio driver | Sensor driver | ... |

| Hardware layer | Acceleration sensor | Gravity sensor | Touch sensor |
|---|---|---|---|

FIG. 2

FIG. 3

FIG. 4(a)

FIG. 4(b)

FIG. 4(c)

FIG. 5

FIG. 6(a)

FIG. 6(b)

FIG. 6(c)

FIG. 7A(a)

FIG. 7A(b)

FIG. 7B

FIG. 8A

FIG. 8B

604

← Sounds and vibration

Sound mode

| | | |
|---|---|---|
| 🔔 | 📳 | 🔕 |
| Sound | Vibration | Silent |
| ⦿ | ○ | ○ |

Adjustable volume level

605

606 607 608

○ 5 ⦿ | 6 |

Volume upper
limit adjustment

610 609

Default 611 612
upper limit

Note: The default upper limit ensures
optimal sound effect. Exceeding the
default upper limit may reduce the device's
lifespan. Adjust with caution.

More

FIG. 9A

(a)

(a)

FIG. 9B

EP 4 451 109 B1

FIG. 10

EP 4 451 109 B1

FIG. 11

FIG. 12

FIG. 13(a)

FIG. 13(b)

FIG. 14(a)

FIG. 14(b)

502

301

501

302

Clock    Calendar    Gallery    Note

Files    Email    Music    Calculator

Camera    Contacts    Phone    Messages

FIG. 15A(a)

FIG. 15A(b)

FIG. 15B

FIG. 16(a)

FIG. 16(b)

FIG. 17

FIG. 18A(a)

FIG. 18A(b)

FIG. 18B

EP 4 451 109 B1

FIG. 19

S2001 Level i

S2002 Continue to increase? — i=N → S2003 Increase volume

S2004 Continue to decrease? — i=1 → S2005 Decrease volume

S2006 Switch between the level i and a level i+1? — i is greater than 1 and less than N → S2007 Adjust volume to an intermediate value

S2008 Update a volume curve

S2009 Collect ambient noise

S2010 Collect volume output by an electronic device

S2011 Calculate a signal-to-noise ratio

S2012 Record a use habit

FIG. 20

FIG. 21(a)

604

← Scenarios

Ringer, messages, and notifications >

Alarms >

Music, videos, and games >

Calls >

AI voice >

FIG. 21(b)

FIG. 21(c)

Electronic device 2200

2203

Communication
interface

2205

2201

Processor

2202

Memory

Computer
program

2204

FIG. 22

**EP 4 451 109 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 112445449 A
- CN 113489844 A
- US 20150249890 A1
- EP 3477857 A1